(19) Europäisches Patentamt
European Patent Office
Office européen des brevets

(11) EP 4 650 337 A1

(12) EUROPEAN PATENT APPLICATION

(43) Date of publication:
**19.11.2025 Bulletin 2025/47**

(21) Application number: **25174936.2**

(22) Date of filing: **08.05.2025**

(51) International Patent Classification (IPC):
***C05G 5/10*** *(2020.01)* ***C05G 5/30*** *(2020.01)*
***C08G 63/16*** *(2006.01)* ***C08G 63/183*** *(2006.01)*
***C08G 67/02*** *(2006.01)* ***C08J 7/04*** *(2020.01)*
***C09D 167/00*** *(2006.01)*

(52) Cooperative Patent Classification (CPC):
**C05G 5/37; C05G 5/10; C05G 5/38; C08G 63/16; C08G 63/183; C08G 67/02; C08J 7/04; C09D 167/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.05.2024 KR 20240064731**
**17.05.2024 KR 20240064733**

(71) Applicant: **SK leaveo Co., Ltd.**
**Gyeonggi-do 16338 (KR)**

(72) Inventors:
- **KIM, Hoon**
**16338 Suwon-si, Gyeonggi-do (KR)**
- **KIM, Kyung Youn**
**16338 Suwon-si, Gyeonggi-do (KR)**
- **KIM, Seong Dong**
**16338 Suwon-si, Gyeonggi-do (KR)**
- **BYEON, Jun Su**
**16338 Suwon-si, Gyeonggi-do (KR)**
- **YOU, Kyoung Hwan**
**16338 Suwon-si, Gyeonggi-do (KR)**
- **LEE, Hyeri**
**16338 Suwon-si, Gyeonggi-do (KR)**
- **LEE, Moon Hyun**
**16338 Suwon-si, Gyeonggi-do (KR)**

(74) Representative: **Isarpatent**
**Patent- und Rechtsanwälte**
**Barth Hassa Peckmann & Partner mbB**
**Friedrichstraße 31**
**80801 München (DE)**

# (54) RESIN COMPOSITION FOR COATING FERTILIZER AND SLOW-RELEASE FERTILIZER INCLUDING THE SAME

(57) Disclosed are a resin composition for coating a fertilizer and a slow-release fertilizer including the same, wherein the resin composition includes the first biodegradable polyester resin including a diol-derived unit, an aliphatic dicarboxylic acid-derived unit, and an aromatic dicarboxylic acid-derived unit, wherein the resin composition has a crystallinity of 10 % to 60 % as measured by differential scanning calorimetry (DSC).

EP 4 650 337 A1

## Description

## BACKGROUND OF THE DISCLOSURE

### Field of the Disclosure

The present disclosure relates to a resin composition for coating a fertilizer and a slow-release fertilizer including the same.

### Description of Related Art

A slow-release fertilizer having a surface covered with a coating material such as resin has excellent controllability over the dissolution of its components, provides the effect of reducing the labor shortage in rural areas, and exhibits effects such as reducing greenhouse gases and reducing environmental loads such as water pollution.

Generally, the coating material of a slow-release fertilizer is a non-degradable material such as a combination of PE and PVA, a combination of PVDC and acrylic, or polyurethane. These have the problem of remaining in the soil or flowing into the water system after fertilizer release.

If a non-degradable material remains in the soil, there is a risk that microplastics will damage crops or be absorbed into the human body, and if the non-degradable material flows into the water system, there is a problem of microplastics accumulating in the water.

As an alternative, biodegradable materials have been considered as coating materials for a slow-release fertilizer. However, biodegradable materials have the problem that it is difficult to control the release rate of fertilizer compared to non-degradable materials. In addition, it is difficult to achieve uniform coating when coating fertilizers, and adhesion occurs between biodegradable materials, making it difficult to secure a coating process.

## SUMMARY OF THE DISCLOSURE

Therefore, the present disclosure has been made in view of the above problems, and it is an object of the present disclosure to provide a resin composition for coating a fertilizer and a solution for coating a fertilizer containing the resin composition, the resin composition having excellent biodegradability after fertilizer release, allowing the control of the release rate of the fertilizer and having excellent coating processability.

It is another object of the present disclosure to provide a slow-release fertilizer and a method of manufacturing the same, the slow-release fertilizer having excellent biodegradability after fertilizer release, a controllable release rate, and excellent coating processability.

In accordance with an aspect of the present disclosure, the above and other objects can be accomplished by the provision of a resin composition for coating a fertilizer, the resin composition including: a first biodegradable polyester resin including a diol-derived unit, an aliphatic dicarboxylic acid-derived unit, and an aromatic dicarboxylic acid-derived unit, wherein the resin composition has a crystallinity of 10 % to 60 % as measured by differential scanning calorimetry (DSC).

In an embodiment of the present disclosure, the first biodegradable polyester resin may have a number average molecular weight of 20,000 g/mol to 100,000 g/mol.

In an embodiment of the present disclosure, the resin composition for coating a fertilizer may include a second biodegradable polyester resin having a crystallinity of 27 % to 60 %.

In an embodiment of the present disclosure, the second biodegradable polyester resin may have a number average molecular weight of 40,000 g/mol to 150,000 g/mol.

In an embodiment of the present disclosure, a weight ratio of the first biodegradable polyester resin:the second biodegradable polyester resin may be 2:8 to 8:2.

In an embodiment of the present disclosure, the resin composition for coating a fertilizer may further include a slip agent.

In an embodiment of the present disclosure, the slip agent may include a silicon-based compound.

In an embodiment of the present disclosure, the content of the slip agent may be 0.1 phr (per hundred resin) to 10 phr compared to the first biodegradable polyester resin.

In an embodiment of the present disclosure, the resin composition for coating a fertilizer may further include an amide-based activator.

In an embodiment of the present disclosure, the resin composition for coating a fertilizer may have a viscosity range of 50 cPs to 150 cPs according to measurement conditions below:

[Measurement conditions]

1) Viscometer: RVDV-II (BROOKFIELD Co.), Spindle 62
2) RPM: 30 rpm (10 sec)
3) Measurement temperature: 25 °C
4) Concentration: 5 % by weight ($CHCl_3$ solvent)

In accordance with another aspect of the present disclosure, there is provided a biodegradable polyester resin for use as a resin composition for coating a fertilizer, the biodegradable polyester resin being mixed with a polybutylene succinate-based resin having a crystallinity of 27 % to 60 %, wherein the biodegradable polyester resin includes a diol-derived unit, an aliphatic dicarboxylic acid-derived unit, and an aromatic dicarboxylic acid-derived unit and has a crystallinity of 10 % to 30 % as measured by differential scanning calorimetry (DSC).

In an embodiment of the present disclosure, the biodegradable polyester resin may further include a slip agent.

In an embodiment of the present disclosure, the slip agent may be included in a content of 0.1 phr (per hundred resin) to 10 phr compared to the biodegradable polyester resin.

A solution for coating a fertilizer according to the present disclosure includes the first biodegradable polyester resin including a diol-derived unit, an aliphatic dicarboxylic acid-derived unit, and an aromatic dicarboxylic acid-derived unit, a fertilizer-coating resin composition having a crystallinity of 10 % to 60 % as measured by differential scanning calorimetry (DSC), and a solvent.

In an embodiment of the present disclosure, the solvent may have a Hansen fractionation dispersion parameter ($f_d$) of 0.5 to 0.9, a Hansen fractionation polarity parameter ($f_p$) of 0 to 0.3, and a Hansen fractionation hydrogen bonding parameter ($f_h$) of 0.1 to 0.4.

In an embodiment of the present disclosure, the content of the resin composition for coating a fertilizer may be 1 % by weight to 15 % by weight based on the total weight of the solution for coating a fertilizer.

The slow-release fertilizer according to the present disclosure includes a fertilizer; and a coating layer formed on the fertilizer, wherein the coating layer includes a first biodegradable polyester resin including a diol-derived unit, an aliphatic dicarboxylic acid-derived unit, and an aromatic dicarboxylic acid-derived unit, and the coating layer has a crystallinity of 10 % to 60 % as measured by differential scanning calorimetry (DSC).

In an embodiment of the present disclosure, the coating layer may have a thickness of 10 $\mu$m to 300 $\mu$m.

In an embodiment of the present disclosure, the coating layer may be included in a content of 5 % by weight to 25 % by weight based on the total weight of the slow-release fertilizer.

In an embodiment of the present disclosure, the first biodegradable polyester resin may have a crystallinity of 10 % to 30 %.

In an embodiment of the present disclosure, the coating layer may further include a slip agent.

In an embodiment of the present disclosure, the slip agent may include a silicon-based compound.

In an embodiment of the present disclosure, the content of the slip agent may be 0.1 phr (per hundred resin) to 10 phr compared to the first biodegradable polyester resin.

In an embodiment of the present disclosure, the coating layer may further include an amide-based activator.

In an embodiment of the present disclosure, the coating layer may further include a second biodegradable polyester resin having a crystallinity of 27 % to 60 % as measured by differential scanning calorimetry (DSC).

In an embodiment of the present disclosure, a weight ratio of the first biodegradable polyester resin:the second biodegradable polyester resin may be 2:8 to 8:2.

In an embodiment of the present disclosure, the volume of the coating layer may be 7 % by volume to 33 % by volume compared to the volume of the fertilizer.

In an embodiment of the present disclosure, the coating layer may be derived from a resin composition for coating a fertilizer, wherein the resin composition for coating a fertilizer has a viscosity range of 50 cPs to 150 cPs according to measurement conditions below:

[Measurement conditions]

1) Viscometer: RVDV-II (BROOKFIELD Co.), Spindle 62
2) RPM: 30 rpm (10 sec)
3) Measurement temperature: 25 °C
4) Concentration: 5 % by weight ($CHCl_3$ solvent)

In accordance with yet another aspect of the present disclosure, there is provided a method of manufacturing the slow-release fertilizer according to the present disclosure, the method including a step of preparing a resin composition for coating a fertilizer; a step of mixing the resin composition for coating a fertilizer with a solvent to prepare a solution for coating a fertilizer; and a step of flowing a fertilizer and the solution for coating a fertilizer to form a coating layer on the fertilizer, wherein the resin composition includes a first biodegradable polyester resin including a diol-derived unit, an aliphatic dicarboxylic acid-derived unit and an aromatic dicarboxylic acid-derived unit and having a crystallinity of 100 % to 30 %; and a second biodegradable polyester resin different from the first biodegradable polyester resin and having a crystallinity of 27 % to 60 %.

In an embodiment of the present disclosure, the resin composition for coating a fertilizer may further include a slip agent in a content of 0.1 phr (per hundred resin) to 10 phr compared to the first biodegradable polyester resin.

In an embodiment of the present disclosure, a weight ratio of the first biodegradable polyester resin:the second biodegradable polyester resin may be 2:8 to 8:2.

In an embodiment of the present disclosure, the solvent may have a Hansen fractionation dispersion parameter ($f_d$) of 0.5 to 0.9, a Hansen fractionation polarity parameter ($f_p$) of 0 to 0.3, and a Hansen fractionation hydrogen bonding parameter ($f_h$) of 0.1 to 0.4.

In an embodiment of the present disclosure, the specific gravity of the solvent may be 0.5 g/$cm^3$ or more and 1.5 g/$cm^3$ or less.

In an embodiment of the present disclosure, the content of the resin composition for coating a fertilizer may be 1 % by weight to 15 % by weight based on the total weight of the solution for coating a fertilizer.

In an embodiment of the present disclosure, the solution for coating a fertilizer may be spray-coated on the fertilizer to form a coating layer thereon.

In an embodiment of the present disclosure, the spray coating may be performed at 5 °C to 50 °C.

## DETAILED DESCRIPTION OF THE DISCLOSURE

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the present specification or application, when a certain component is "included," this does not exclude other elements, but rather includes other elements, unless otherwise specifically stated. In addition, it should be understood that all numerical ranges representing physical property values, dimensions, etc. of components described in the present specification or application are modified by the term 'about' in all cases unless otherwise specified. In addition, "ppm" in this specification or application means weight basis. In addition, "derived from" in this specification or application means a component or structure derived from a substance, or the substance itself. In addition, "derived functional group" in this specification or application refers to a linking group that connects each polymer within a coupled polymer by participating in the coupling reaction of a coupling agent added during a coupling reaction, or a terminal group that does not participate in a coupling reaction between polymers and remains bound within the polymers or to the ends of the polymers.

A resin composition for coating a fertilizer according to the present disclosure includes a first biodegradable polyester resin including a diol-derived unit, an aliphatic dicarboxylic acid-derived unit, and an aromatic dicarboxylic acid-derived unit.

The diol may be an aliphatic diol. The diol may be a bio-derived diol. The diol may be at least one selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol or derivatives thereof.

The diol may be at least one selected from the group consisting of 1,4-butanediol, 1,2-ethanediol, 1,3-propanediol, diethylene glycol, neopentyl glycol and derivatives thereof.

The diol may be at least one selected from the group consisting of 1,4-butanediol, 1,2-ethanediol, 1,3-propanediol and derivatives thereof.

The diol may include 1,4-butanediol or its derivative.

The aliphatic dicarboxylic acid may be at least one selected from the group consisting of oxalic acid, malonic acid, succinic acid, maleic acid, fumaric acid, glutaric acid, adipic acid, pimelic acid, serveric acid, azelaic acid, sebacic acid, dodecane dicarboxylic acid and 1,4-cyclohexane dicarboxylic acid and derivatives thereof.

The aliphatic dicarboxylic acid may be at least one selected from the group consisting of adipic acid, succinic acid and sebacic acid and derivatives thereof.

The aliphatic dicarboxylic acid may include adipic acid or derivatives thereof.

The aromatic dicarboxylic acid may be at least one selected from the group consisting of phthalic acid, terephthalic acid, isophthalic acid, 1,4-naphthalene dicarboxylic acid, 1,5-naphthalene dicarboxylic acid, 2,6-naphthalene dicarboxylic acid, 1,8-naphthalene dicarboxylic acid, 4,4'-diphenyl dicarboxylic acid, 4,4'-diphenylether dicarboxylic acid, anthracene dicarboxylic acid, phenanthrene dicarboxylic acid and derivatives thereof.

The aromatic dicarboxylic acid may be at least one selected from the group consisting of terephthalic acid, dimethyl terephthalate, 2,6-naphthalene dicarboxylic acid, isophthalic acid and derivatives thereof.

The aromatic dicarboxylic acid may include terephthalic acid, dimethyl terephthalate or a derivative thereof.

In the first biodegradable polyester resin, a molar ratio of the total diol residues including the diol to the total dicarboxylic acid residues including the aromatic dicarboxylic acid and the aliphatic dicarboxylic acid may be about 1:0.9 to about 1:1.1, or about 1:0.95 to about 1:1.05.

In the first biodegradable polyester resin, a molar ratio of the aromatic dicarboxylic acid residue to the aliphatic dicarboxylic acid residue may be about 3:7 to about 7:3, about 3.3:6.7 to about 6.7:3.3, about 4:6 to about 6:4, or about 4.2:5.8 to about 5:5.

The first biodegradable polyester resin may include a 1,4-butanediol-derived diol residue in a content of about 90 mol% or more, about 95 mol% or more, or about 98 mol% or more based on the total diol.

The first biodegradable polyester resin may include a terephthalic acid or dimethyl terephthalate-derived aromatic dicarboxylic acid residue in a content of about 30 mol% to about 70 mol%, about 35 mol% to about 65 mol%, about 40 mol% to about 60 mol%, or about 43 mol% to about 53 mol% based on the total dicarboxylic acid.

The first biodegradable polyester resin may include an adipic acid-derived aliphatic dicarboxylic acid residue in a content of about 30 mol% to about 70 mol%, about 35 mol% to about 65 mol%, about 40 mol% to about 60 mol%, or about 47 mol% to about 57 mol% based on the total dicarboxylic acid.

The first biodegradable polyester resin may include at least one first block and at least one second block. The first biodegradable polyester resin may have a molecular structure in which the first block and the second block are alternately bonded.

The first block may include the diol residue and the aromatic dicarboxylic acid residue. The first block may be formed by the esterification of the diol and the aromatic dicarboxylic acid. The first block may include only the diol residue and the aromatic dicarboxylic acid residue. The first block may include only repeating units formed by the esterification of the diol and the aromatic dicarboxylic acid. The first block may mean the sum of repeating units of the diol and the aromatic dicarboxylic acid before being combined with the aliphatic dicarboxylic acid.

The second block may include the diol residue and the aliphatic dicarboxylic acid residue. The second block may be formed by the esterification of the diol and the aliphatic dicarboxylic acid. The second block may include only the diol residue and the aliphatic dicarboxylic acid residue. The second block may include only repeating units formed by the esterification of the diol and the aliphatic dicarboxylic acid. The second block may mean the sum of repeating units of the diol and the aliphatic dicarboxylic acid before being combined with the aromatic dicarboxylic acid.

In the first biodegradable polyester resin, a ratio (X/Y) of the number (X) of the first blocks to the number (Y) of the second blocks may be about 0.5 to about 1.5, about 0.6 to about 1.4, about 0.7 to about 1.3, about 0.75 to about 1.2, or about 0.8 to about 1. The number of the first blocks may be smaller than the number of the second blocks.

The number of the first blocks may be about 30 to about 300, about 40 to about 250, about 50 to about 220, about 60 to about 200, about 70 to about 200, or about 75 to about 200.

The number of the first blocks may vary depending upon the content of the aromatic dicarboxylic acid, the molecular weight of the first biodegradable polyester resin and an alternating degree to be described below. That is, the number of the first blocks may increase as the molar ratio of the aromatic dicarboxylic acid increases, the molecular weight of the first biodegradable polyester resin increases, and an alternating ratio to be described below increases.

The number of the second blocks may be about 30 to about 300, about 40 to about 250, about 50 to about 220, about 60 to about 200, about 70 to about 200, or about 75 to about 200.

The number of the second blocks may vary depending upon the content of the aliphatic dicarboxylic acid, the molecular weight of the first biodegradable polyester resin and an alternating ratio to be described below.

When the first biodegradable polyester resin includes the first block and the second block in the above range, a coating layer including the first biodegradable polyester resin may have appropriate mechanical strength and improved biodegradability.

The first biodegradable polyester resin may include Bond Structures 1 to 3 below:

[Bond Structure 1] - Aromatic dicarboxylic acid - diol - aliphatic dicarboxylic acid -

[Bond Structure 2] - Aromatic dicarboxylic acid - diol - aromatic dicarboxylic acid -

[Bond Structure 3] - Aliphatic dicarboxylic acid - diol - aliphatic dicarboxylic acid -

The diol included in Bond Structure 1 is positioned between the aromatic dicarboxylic acid and the aliphatic dicarboxylic acid and bonded to the aromatic dicarboxylic acid and the aliphatic dicarboxylic acid. The diol included in Bond Structure 1 may be positioned between the aromatic dicarboxylic acid and the aliphatic dicarboxylic acid and directly esterification-bonded to the aromatic dicarboxylic acid and the aliphatic dicarboxylic acid.
The diol included in Bond Structure 2 is positioned between the aromatic dicarboxylic acid and the aromatic dicarboxylic acid and bonded to the aromatic dicarboxylic acid and the aromatic dicarboxylic acid. The diol included in Bond Structure 2 may be positioned between the aromatic dicarboxylic acid and the aromatic dicarboxylic acid and directly esterification-bonded to the aromatic dicarboxylic acid and the aromatic dicarboxylic acid.
The diol included in Bond Structure 3 is positioned between the aliphatic dicarboxylic acid and the aliphatic dicarboxylic acid and bonded to the aliphatic dicarboxylic acid and the aliphatic dicarboxylic acid. The diol included in Bond Structure 3 may be positioned between the aliphatic dicarboxylic acid and the aliphatic dicarboxylic acid and directly esterification-bonded to the aliphatic dicarboxylic acid and the aliphatic dicarboxylic acid.
The first biodegradable polyester resin may have an alternating ratio.
The alternating ratio refers to a ratio of a diol bonded between the aromatic dicarboxylic acid and the aliphatic dicarboxylic acid among the diols. That is, the alternating ratio may be a ratio of a diol included in Bonding Structure 1 among the diols. The alternating ratio may be obtained by dividing the number of moles of a diol included in Bonding Structure 1 by the sum of the number of moles of a diol included in Bonding Structure 1, the number of moles of a diol included in Bonding Structure 2 and the number of moles of a diol included in Bonding Structure 3.
The alternating ratio may be a ratio of a diol bonded between the heterogeneous dicarboxylic acids among the total diols.
The alternating ratio may be calculated according to Equation 1 below:

[Equation 1]

$$\text{Alternating ratio} = \frac{DM1}{DM1 + DM2 + DM3}$$

In Equation 1, DM1 is a molar ratio of a diol included in Bonding Structure 1, DM2 is a molar ratio of a diol included in Bonding Structure 2, and DM3 is a molar ratio of a diol included in Bonding Structure 3.
In the first biodegradable polyester resin, the alternating ratio may be about 0.3 to about 0.7, about 0.37 to about 0.59, about 0.4 to about 0.56, or about 0.45 to about 0.53.
The first biodegradable polyester resin may include a hard segment ratio. The hard segment ratio refers to a ratio of a diol bonded between the aromatic dicarboxylic acid and the aromatic dicarboxylic acid among the diols.
The hard segment ratio may be a molar ratio of a diol included in Bonding Structure 2 among the total diols. The hard segment ratio may be obtained by dividing the number of moles of a diol included in Bonding Structure 2 by the sum of the number of moles of a diol included in Bonding Structure 1, the number of moles of a diol included in Bonding Structure 2 and the number of moles of a diol included in Bonding Structure 3.
The hard segment ratio may be represented by Equation 2 below:

[Equation 2]

$$\text{Hard segment ratio} = \frac{DM2}{DM1 + DM2 + DM3}$$

In Equation 2, DM1 is a molar ratio of a diol included in Bonding Structure 1, DM2 is a molar ratio of a diol included in Bonding Structure 2, and DM3 is a molar ratio of a diol included in Bonding Structure 3.
The hard segment ratio may be about 0.15 to about 0.35, about 0.2 to about 0.3, about 0.21 to about 0.29, or about 0.22 to about 0.28.
The first biodegradable polyester resin composition may include soft segments.
A soft segment ratio refers to a ratio of a diol bonded between the aliphatic dicarboxylic acid and the aliphatic dicarboxylic acid among the diols.
The soft segment ratio may be a molar ratio of a diol included in Bonding Structure 3 among the total diols. The soft segment ratio may be obtained by dividing the number of moles of a diol included in Bonding Structure 3 by the sum of the

number of moles of a diol included in Bonding Structure 1, the number of moles of a diol included in Bonding Structure 2 and the number of moles of a diol included in Bonding Structure 3.

The soft segment ratio may be represented by Equation 3 below:

[Equation 3]

$$\text{Soft segment ratio} = \frac{DM3}{DM1 + DM2 + DM3}$$

In Equation 3, DM1 is a molar ratio of a diol included in Bonding Structure 1, DM2 is a molar ratio of a diol included in Bonding Structure 2, and DM3 is a molar ratio of a diol included in Bonding Structure 3.

The soft segment ratio may be about 0.16 to about 0.36, about 0.21 to about 0.31, about 0.22 to about 0.30, or about 0.23 to about 0.29.

The soft segment ratio may be larger than the hard segment ratio.

A ratio of the hard segments to the soft segments may be about 0.92 to about 0.99. That is, DM2 divided by DM3 may be about 0.92 to about 0.99.

The alternating ratio, the hard segment ratio and the soft segment ratio may be measured by nuclear magnetic resonance spectroscopy. The first biodegradable polyester resin may be dissolved in a solvent such as CDCl3, and may be analyzed by $^{1}$H-NMR and/or $^{13}$C-NMR analysis using a nuclear magnetic resonance (NMR) instrument at room temperature.

When the diol is 1,4-butanediol, the aromatic dicarboxylic acid is terephthalic acid or dimethyl terephthalate, and the aliphatic dicarboxylic acid is adipic acid, analysis of the first biodegradable polyester resin by the nuclear magnetic resonance spectroscopy may include a first peak, a second peak, a third peak, a fourth peak, a fifth peak, a sixth peak, a seventh peak, an eighth peak, a ninth peak, a tenth peak, and an eleventh peak.

When the diol is 1,4-butanediol, the aromatic dicarboxylic acid is terephthalic acid or dimethyl terephthalate, and the aliphatic dicarboxylic acid is adipic acid, analysis of the first biodegradable polyester resin by the nuclear magnetic resonance spectroscopy may include a peak derived from the diol of Bonding Structure 1, a peak derived from the diol of Bonding Structure 2 and a peak derived from the diol of Bonding Structure 3 at about 3.5 ppm to about 4.6 ppm.

In a range of about 3.5 ppm to about 4.6 ppm, the first peak, the second peak, the third peak and the fourth peak may be defined in order from high ppm to low ppm. In addition, in a range of about -3.4 ppm to about -4.3 ppm based on the ppm of the ninth peak, the first peak, the second peak, the third peak and the fourth peak may be defined in order from high ppm to low ppm.

The - ppm direction may be an upfield direction or a shielded direction. For example, - 3.4 ppm may mean a position of 3.4 ppm in an upfield direction. For example, -3.4 ppm may mean a position of 3.4 ppm in a shielded direction.

The analysis of the first biodegradable polyester resin by the nuclear magnetic resonance spectroscopy may include a peak derived from the diol of Bonding Structure 1, a peak derived from the diol of Bonding Structure 2 and a peak derived from the diol of Bonding Structure 3 also at about 1.0 ppm to about 2.5 ppm.

In a range of about 1.0 ppm to about 2.5 ppm, the tenth peak, the fifth peak, the sixth peak, the seventh peak, the eighth peak and the eleventh peak may be defined in order from high ppm to low ppm. In a range of about -6.0 ppm to about -6.7 ppm based on the ppm of the ninth peak, the fifth peak, the sixth peak, the seventh peak, the eighth peak and the eleventh peak may be defined in order from high ppm to low ppm.

In a range of about 7.5 ppm to about 8.5 ppm, the ninth peak may be formed. The ninth peak may be derived from the aromatic dicarboxylic acid. The ninth peak may be derived from an aromatic ring included in the aromatic dicarboxylic acid. The ninth peak may be derived from an aromatic ring included in the terephthalic acid or the dimethyl terephthalate.

The tenth peak and the eleventh peak may be derived from the aliphatic dicarboxylic acid. The tenth peak and the eleventh peak may be derived from the adipic acid.

The first peak may be located at about -3.6 ppm to about -3.68 ppm based on the ppm of the ninth peak. The second peak may be located at about -3.69 ppm to about -3.75 ppm based on the ppm of the ninth peak. The third peak may be located at about -3.9 ppm to about -3.97 ppm based on the ppm of the ninth peak. The fourth peak may be located at about -3.98 ppm to about -4.1 ppm based on the ppm of the ninth peak. The fifth peak may be located at about -6.0 ppm to about -6.19 ppm based on the ppm of the ninth peak. The sixth peak may be located at about -6.2 ppm to about -6.26 ppm based on the ppm of the ninth peak. The seventh peak may be located at about -6.27 ppm to about -6.34 ppm based on the ppm of the ninth peak. The eighth peak may be located at about -6.35 ppm to about -6.42 ppm based on the ppm of the ninth peak. The tenth peak may be located at about -5.6 ppm to about -5.8 ppm based on the ppm of the ninth peak. The eleventh peak may be located at about -6.421 ppm to about -6.5 ppm based on the ppm of the ninth peak. The position of the ninth peak based on ppm may be the position of each peak when the position of the ninth peak is 0 ppm.

The areas of the first peak, the second peak, the third peak, the fourth peak, the fifth peak, the sixth peak, the seventh peak, the eighth peak, the tenth peak and the eleventh peak may be normalized based on the area of the ninth peak. That is, when the area of the ninth peak is 1, the areas of the first peak, the second peak, the third peak, the fourth peak, the fifth peak, the sixth peak, the seventh peak, the eighth peak, the tenth peak and the eleventh peak may be relatively determined.

The alternating ratio may be derived from Equation 4 or 5 below:

[Equation 4]

$$\text{Alternating ratio} = \frac{PA2 + PA3}{PA1 + PA2 + PA3 + PA4}$$

In Equation 4, PA1 is the area of the first peak, PA2 is the area of the second peak, PA3 is the area of the third peak, and PA4 is the area of the fourth peak.

[Equation 5]

$$\text{Alternating ratio} = \frac{PA6 + PA7}{PA5 + PA6 + PA7 + PA8}$$

In Equation 5, PA5 is the area of the fifth peak, PA6 is the area of the sixth peak, PA7 is the area of the seventh peak, and PA8 is the area of the eighth peak.

The hard segment ratio may be derived by Equation 6 or 7 below:

[Equation 6]

$$\text{Hard segment ratio} = \frac{PA1}{PA1 + PA2 + PA3 + PA4}$$

In Equation 6, PA1 is the area of the first peak, PA2 is the area of the second peak, PA3 is the area of the third peak, and PA4 is the area of the fourth peak.

[Equation 7]

$$\text{Hard segment ratio} = \frac{PA5}{PA5 + PA6 + PA7 + PA8}$$

In Equation 7, PA5 is the area of the fifth peak, PA6 is the area of the sixth peak, PA7 is the area of the seventh peak, and PA8 is the area of the eighth peak.

The soft segment ratio may be derived from Equation 8 or 9 below:

[Equation 8]

$$\text{Soft segment ratio} = \frac{PA4}{PA1 + PA2 + PA3 + PA4}$$

In Equation 8, PA1 is the area of the first peak, PA2 is the area of the second peak, PA3 is the area of the third peak, and PA4 is the area of the fourth peak.

[Equation 9]

$$\text{Soft segment ratio} = \frac{PA8}{PA5 + PA6 + PA7 + PA8}$$

In Equation 9, PA5 is the area of the fifth peak, PA6 is the area of the sixth peak, PA7 is the area of the seventh peak, and PA8 is the area of the eighth peak.

The area of the first peak may be about 0.35 to about 0.6, about 0.4 to about 0.55, about 0.43 to about 0.5, about 0.43 to about 0.52, or about 0.45 to about 0.49.

The area of the second peak may be about 0.37 to about 0.57, about 0.41 to about 0.54, about 0.45 to about 0.53, about 0.45 to about 0.55, or about 0.47 to about 0.53.

The area of the third peak may be about 0.37 to about 0.57, about 0.41 to about 0.54, about 0.45 to about 0.53, about 0.45 to about 0.55, or about 0.47 to about 0.53.

The area of the fourth peak may be about 0.4 to about 0.7, about 0.45 to about 0.65, about 0.48 to about 0.6, about 0.48 to about 0.60, or about 0.50 to about 0.58.

The area of the fifth peak may be about 0.35 to about 0.6, about 0.4 to about 0.55, about 0.43 to about 0.53, about 0.43 to about 0.52, about 0.45 to about 0.49.

The area of the sixth peak may be about 0.35 to about 0.6, about 0.4 to about 0.55, about 0.43 to about 0.5, about 0.45 to about 0.55, or about 0.47 to about 0.53.

The area of the seventh peak may be about 0.41 to about 0.71, about 0.45 to about 0.65, about 0.48 to about 0.6, about 0.45 to about 0.55, or about 0.47 to about 0.53.

The area of the eighth peak may be about 0.4 to about 0.7, about 0.45 to about 0.65, about 0.48 to about 0.6, or about 0.50 to about 0.58.

The area of the tenth peak may be about 0.7 to about 2.5, about 0.75 to about 2, about 0.8 to about 1.5, about 1.0 to about 1.15, or about 1.02 to about 1.13.

The area of the eleventh peak may be about 0.7 to about 3.5, about 0.7 to about 3, about 0.8 to about 2.5, about 1.0 to about 1.15, or about 1.02 to about 1.13.

The sum of the area of the first peak, the area of the second peak, the area of the third peak and the area of the fourth peak may be about 1.49 to about 2.44, about 1.81 to about 2.16, about 1.9 to about 2.2, or about 1.95 to about 2.1. Here, the sum of the area of the first peak, the area of the second peak, the area of the third peak and the area of the fourth peak may mean the sum of the total number of ester bonds based on the number of terephthalic acids.

The sum of the area of the second peak and the area of the third peak may be about 0.95 to about 1.10, or about 0.98 to about 1.07. Here, the sum of the area of the first peak and the area of the third peak may mean the degree of extension of molecular bonds of the first biodegradable polyester resin.

A ratio of the area of the fourth peak relative to the area of the first peak (the area of the fourth peak/the area of the first peak) may be about 1.1 to about 1.3, about 0.67 to about 2, about 0.96 to about 1.40, or about 1.15 to about 1.25. A ratio of the area of the fourth peak relative to the area of the first peak may mean a ratio of soft segments to hard segments in the molecular structure of the first biodegradable polyester resin. That is, the first biodegradable polyester resin may have improved adhesive properties as the ratio of the area of the fourth peak relative to the area of the first peak increases.

A ratio of the area of the fourth peak relative to the area of the third peak (the area of the fourth peak/the area of the third peak) may be about 0.7 to about 1.89, about 0.91 to about 1.33, about 1.0 to about 1.2, or about 1.01 to about 1.1.

A ratio of the area of the first peak relative to the area of the second peak (the area of the first peak/the area of the second peak) may be about 0.61 to about 1.62, about 0.81 to about 1.11, about 0.85 to about 0.95, or about 0.86 to about 0.94.

A ratio of the area of the fifth peak relative to the area of the first peak (the area of the fifth peak/the area of the first peak) may be about 0.61 to about 1.71, about 0.96 to about 1.40, about 0.8 to about 1.2, or about 0.9 to about 1.1.

A ratio of the area of the sixth peak relative to the area of the second peak (the area of the sixth peak/ the area of the second peak) may be about 0.58 to about 1.71, about 0.86 to about 1.16, about 0.8 to about 1.2, or about 0.9 to about 1.1.

A ratio of the area of the seventh peak relative to the area of the third peak (the area of the seventh peak/the area of the third peak) may be about 0.72 to about 1.92, about 0.91 to about 1.33, about 0.8 to about 1.2, or about 0.9 to about 1.1.

A ratio of the area of the eighth peak relative to the area of the fourth peak (the area of the eighth peak/the area of the fourth peak) may be about 0.59 to about 1.75, about 0.80 to about 1.2, or about 0.9 to about 1.1.

The number average molecular weight of the first biodegradable polyester resin may be 20,000 g/mol to 100,000 g/mol, 20,000 g/mol to 80,000 g/mol, 20,000 g/mol to 70,000 g/mol, or 30,000 g/mol to 62,000 g/mol. When the range is satisfied, adhesiveness to fertilizer is excellent, and resin crystallinity capable of improving coating processability may be accomplished. The number average molecular weight may be measured using gel permeation chromatography (GPC).

The crystallinity of the first biodegradable polyester resin may be 10 % to 30 %, 10 % or more and less than 30 %, 12 % or more and less than 30 %, 12 % to 28 %, or 15 % to 25 %. When the range is satisfied, adhesiveness to fertilizer is excellent, and fusion between the resin composition for coating a fertilizer may be suppressed.

The crystallinity may be calculated as the percentage of a melting enthalpy ($\Delta H_m$) measured using differential scanning calorimetry (DSC) according to ASTM D-3417 divided by a melting enthalpy ($\Delta H_c$) in a 100% crystal.

Specifically, it may be calculated according to the following calculation formula:

[Calculation formula] Crystallinity (%) = [Energy required to melt 1 g of first biodegradable polyester resin (crystal-melting energy (J/g) - crystal-creating energy (J/g)) / energy required to melt 1 g of first biodegradable polyester resin with 100% crystallinity (J/g)] $\times$ 100 [Calculation Formula]

The resin composition for coating a fertilizer according to the present disclosure may include a second biodegradable polyester resin having a crystallinity of 27 % to 60 %.

The second biodegradable polyester resin may complement the chemical and mechanical properties of the first biodegradable polyester resin.

As the resin composition for coating a fertilizer further includes the second biodegradable polyester resin, the adhesiveness between the resin composition for coating a fertilizer may be suppressed while maintaining the adhesiveness between the fertilizer and the resin composition for coating a fertilizer, so that fertilizer-coating processability may be secured, and the adhesion between the slow-release fertilizer after coating the fertilizer may be suppressed.

The number average molecular weight of the second biodegradable polyester resin may be 40,000 g/mol to 150,000 g/mol, 50,000 g/mol to 140,000 g/mol, 50,000 g/mol to 100,000 g/mol, or 50,000 g/mol to 80,000 g/mol.

The crystallinity of the second biodegradable polyester resin may be 27 % to 60 %, 30 % to 60 %, 35 % to 60 %, 40 % to 60 %, 45 % to 60 %, or 45 % to 55 %.

When the range is satisfied, fertilizer-coating processability may be secured, and the adhesion between the slow-release fertilizer after coating the fertilizer may be suppressed.

The second biodegradable polyester resin may include at least one of polybutylene azelate terephthalate (PBAzT), polybutylene sebacate terephthalate (PBSeT), polyhydroxyalkanoate (PHA), and polybutylene succinate (PBS).

Preferably, the second biodegradable polyester resin may include polybutylene succinate (PBS).

The PBS may be a biodegradable resin synthesized by polycondensation through the esterification reaction between 1,4-butanediol (1,4-BDO) and succinic acid, and the transesterification reaction of oligomers produced by the esterification reaction.

The PBS is environmentally friendly as it can be naturally decomposed by microorganisms, etc., and may have improved mechanical properties such as breaking strength, tensile strength, elongation, and hardness.

A weight ratio of the first biodegradable polyester resin:the second biodegradable polyester resin may be 2:8 to 8:2, 3:7 to 7:3, 4:6 to 7:3, or 4:6 to 6:4. When the range is satisfied, the average crystallinity of the resin composition for coating a fertilizer is adjusted to a certain range, so that adhesiveness to fertilizer is excellent, the release rate of the fertilizer may be controlled, and coating processability may be improved.

The resin composition for coating a fertilizer according to the present disclosure has a crystallinity of 10% to 60% as measured by differential scanning calorimetry (DSC).

Preferably, the crystallinity may be 12% to 60 %, 15% to 60 %, 17% to 60 %, 20 % to 60 %, 20 % to 50 %, 25 % to 50 %, 25 % to 40 %, or 29 % to 37.5 %. When the range is satisfied, the adhesiveness between the resin composition for coating a fertilizer may be suppressed, so that fertilizer-coating processability may be secured, and the adhesion between

the slow-release fertilizer after coating the fertilizer may be suppressed.

The crystallinity of the resin composition for coating a fertilizer according to the present disclosure may be calculated according to Equation 1 below. The crystallinity according to Equation 1 below may be 10 % to 60 %.

[Equation 1]

$$\text{Crystallinity} = (A \times A_p) + (B \times B_p)$$

In Equation 1, A is the crystallinity of the first biodegradable polyester resin, B is the crystallinity of the second biodegradable polyester resin, $A_p$ is a ratio of the weight of the first biodegradable polyester resin to the total weight of the first biodegradable polyester resin and the second biodegradable polyester resin, $B_p$ is a ratio of the weight of the second biodegradable polyester resin to the total weight of the first biodegradable polyester resin and the second biodegradable polyester resin, and $A_p$ and $B_p$ are decimal numbers.

The decimal numbers are percentages expressed in decimal format. For example, 50 % is expressed as 0.5.

In Equation 1, A may be 10 % to 30 %, 10 % or more and less than 30 %, 12 % or more and less than 30 %, 12 % to 28 %, or 15 % to 25 %.

In Equation 1, B may be 27 % to 60 %, 30 % to 60 %, 35 % to 60 %, 40 % to 60 %, 45 % to 60 %, or 45 % to 55 %.

For example, when the resin composition for coating a fertilizer is mixed with 50 % by weight of the first biodegradable polyester resin having a crystallinity of 10 % and 50 % by weight of the second biodegradable polyester resin having a crystallinity of 50 %, the crystallinity {(10 % × 0.5) + (50 % × 0.5)} according to Equation 1 may be calculated as 30 %.

The crystallinity of the resin composition for coating a fertilizer may be adjusted depending upon the crystallinity of the first biodegradable polyester resin, the crystallinity of the second biodegradable polyester resin, and the weight ratio of the first biodegradable polyester resin to the second biodegradable polyester resin.

The resin composition for coating a fertilizer may satisfy Equation 2 below:

[Equation 2]

$$20 \leq B(\%) - A(\%) \leq 45$$

In Equation 2, A and B are as defined in Equation 1 and are numerical values excluding units.

The fact that the resin composition for coating a fertilizer has a difference in crystallinity according to Equation 2 may have a meaning as an indicator that the fertilizer-coating processability may be secured while maintaining the adhesiveness between the fertilizer and the resin composition for coating a fertilizer.

The resin composition for coating a fertilizer may have a viscosity range of 50 cPs to 150 cPs, 50 cPs to 140 cPs, 50 cPs to 135 cPs, or 50 cPs to 130 cPs according to the following measurement conditions. When the range is satisfied, adhesiveness to fertilizer is excellent, and the adhesiveness between the resin composition for coating a fertilizer may be suppressed.

[Measurement conditions]

1) Viscometer: RVDV-II (BROOKFIELD Co.), Spindle 62
2) RPM: 30 rpm(10 sec)
3) Measurement temperature: 25 °C
4) Concentration: 5 % by weight ($CHCl_3$ a solvent)

The resin composition for coating a fertilizer may further include a slip agent.

The adhesiveness between the resin composition for coating a fertilizer may be suppressed by the slip agent. In addition, a uniform coating layer may be formed on the fertilizer surface. In addition, the adhesion between the slow-release fertilizer may be suppressed after coating the fertilizer. Accordingly, fertilizer-coating processability may be secured.

The content of the slip agent may be 0.1 phr (per hundred resin) to 10 phr, 0.1 phr to 8 phr, 0.1 phr to 5 phr, or 0.1 phr to 3 phr, compared to the first biodegradable polyester resin. When the range is satisfied, the adhesiveness between the resin composition for coating a fertilizer may be suppressed, and fertilizer-coating processability may be secured.

The slip agent may include a silicon-based compound.

The epoxy equivalent weight of the silicon-based compound may be 3,000 g/mol to 10,000 g/mol, 4,000 g/mol to 10,000 g/mol, 5,000 g/mol to 10,000 g/mol, or 4,500 g/mol to 5,700 g/mol.

The silicon-based compound may have an average particle size of 0.1 μm to 5 μm, 0.1 μm to 4 μm, 0.1 μm to 3 μm, 0.5 μm to 3 μm, or 1 μm to 3 μm according to the CTM1151 measurement method.

The silicon-based compound may have a bulk density of 0.01 g/mL to 1 g/mL, 0.1 g/mL to 1 g/mL, 0.1 g/mL to 0.5 g/mL, or 0.1 g/mL to 0.3 g/mL according to the CTM0025 measurement method.

The silicon-based compound may have a volatile content of 1.5 % by weight or less, 1.2 % by weight or less, 1 % by weight or less, or greater than 0 % by weight and 1 % by weight or less according to the CTM0208 measurement method. Specifically, the volatile content may be measured as a content when 2 g of the silicon compound volatilizes at about 105 °C for 2 hours.

The content of the silicon-based compound may be 90 % by weight to 99.9 % by weight, 90 % by weight to 99 % by weight, 90 % by weight to 98 % by weight, or 90 % by weight to 97 % by weight, 91 % by weight to 97 % by weight, 92 % by weight to 97 % by weight, 93 % by weight to 97 % by weight, or 94 % by weight to 97 % by weight based on the total weight of the slip agent.

When the range is satisfied, heat resistance and dispersibility may be improved.

The silicon-based compound may include at least one of compounds represented by Formulas 1 and 2 below. When the silicon-based compound contains a specific structure represented by Formula 1 and/or Formula 2, the resin composition for coating a fertilizer may be uniformly dispersed. In addition, a membrane may be formed on the surface of the resin composition for coating a fertilizer due to the migration effect, so that the adhesion phenomenon between a resin composition for coating a fertilizer may be reduced. In addition, the adhesion between the slow-release fertilizer may be suppressed after coating the fertilizer, so that fertilizer-coating processability may be secured.

[Formula 1]

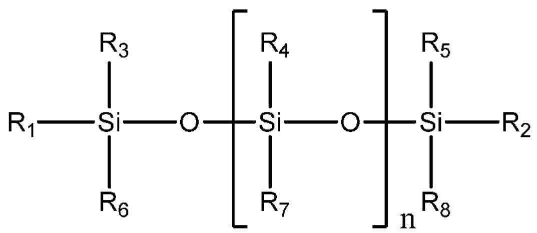

In Formula 1, $R_1$ and $R_2$ are each independently hydrogen, a hydroxyl group, an alkyl group having 1 to 10 carbon atoms, a heteroalkyl group having 1 to 10 carbon atoms and containing at least one heteroatom selected from sulfur, oxygen and nitrogen, or a heteroalkyl group having 1 to 10 carbon atoms, containing a hydroxyl group at their terminals and including at least one heteroatom selected from sulfur, oxygen and nitrogen, $R_3$ to $R_8$ are each independently an alkyl group having 1 to 5 carbon atoms, and n is an integer from 1 to 50.

$R_1$ and $R_2$ may be a heteroalkyl group having 1 to 10 carbon atoms, containing a hydroxyl group at their terminals and including at least one heteroatom selected from sulfur, oxygen and nitrogen.

$R_1$ and $R_2$ may be heteroalkyl groups containing a hydroxyl group at their terminals, including an oxygen atom and having 1 to 10 carbon atoms.

$R_3$ to $R_8$ may be methyl groups.

n may be an integer of 1 to 50, 1 to 30, 1 to 10, or 1 to 5.

[Formula 2]

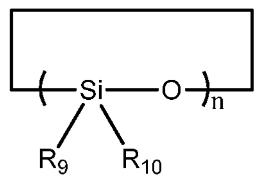

In Formula 2, $R_9$ and $R_{10}$ are each independently an alkyl group having 1 to 5 carbon atoms, and n is an integer of 3 to 8.

$R_9$ to $R_{10}$ may be a methyl group.

N may be an integer of 3 to 6.
The slip agent may further include silica.
The silica may improve the compatibility between the resin composition for coating a fertilizer and the silicon-based compound, and may further improve the efficiency of the lubricating effect on the surface of the resin composition for coating a fertilizer.
The resin composition for coating a fertilizer may further include an amide-based activator.
The amide-based activator may include at least one of compounds represented by Formulas 3 to 5 below. When the amide-based activator contains a specific structure represented by Formulas 3 to 5 below, the resin composition for coating a fertilizer may be uniformly dispersed. In addition, a membrane may be formed on the surface of the resin composition for coating a fertilizer due to the migration effect, so that the adhesion phenomenon between a resin composition for coating a fertilizer may be reduced. In addition, the adhesion between the slow-release fertilizer may be suppressed after coating the fertilizer, so that fertilizer-coating processability may be secured.

[Formula 3]

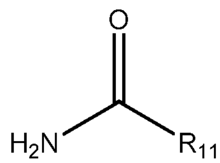

[Formula 4]

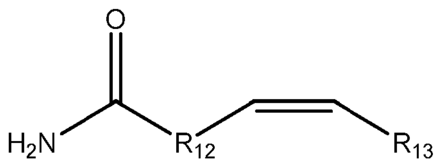

[Formula 5]

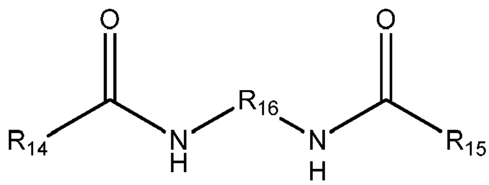

In Formulas 3 to 5, $R_{11}$ to $R_{15}$ are each independently a straight-chain or branched alkyl group having 2 to 25 carbon atoms, and $R_{16}$ is an alkylene group having 1 to 5 carbon atoms.
The compound represented by Formula 3 may be stearamide.
The compound represented by Formula 4 may be oleamide.
The compound represented by Formula 5 may be N,N-ethylene bis(stearamide).
The resin composition for coating a fertilizer may further include an adhesion enhancer.
The adhesiveness between the fertilizer and the coating layer may be improved due to the adhesion enhancer. In addition, the release rate of the slow-release fertilizer which is functionally required within a certain period may be controlled.
The adhesion enhancer may include a silane coupling agent.
The silane coupling agent may include a compound represented by Formula 6 below. When the silane coupling agent includes a specific structure represented by Formula 6, it may be uniformly dispersed in the resin composition for coating a fertilizer. In addition, the adhesion between the fertilizer, which is an adherent material, and the coating layer may be improved, so that the coating layer may be uniformly formed on the fertilizer. In addition, cracking of the coating layer due to changes over time may be suppressed so that a release rate within a certain period which is functionally required in a slow-release fertilizer may be controlled.

[Formula 6]

$$R_{20}—O—R_{19}—Si(OR_{17})_n(R_{18})_{3-n}$$

In Formula 6, $R_{17}$ and $R_{18}$ are each independently hydrogen or an alkyl group having 1 to 5 carbon atoms, $R_{19}$ is an alkylene group having 1 to 5 carbon atoms, $R_{20}$ is an alkyl group, cycloalkyl group, or aryl group containing an epoxy group, and n is an integer of 0 to 3.

$R_{17}$ may be a methyl group or an ethyl group.

n may be an integer of 1 to 3.

Preferably, $R_{17}$ may be a methyl group, and n may be an integer of 3. In this case, the reactivity between the fertilizer, which is an adherent material, and the resin composition for coating a fertilizer may be improved so that the adhesive force between the fertilizer and the coating layer may be enhanced and the coating layer may be formed more uniformly on the fertilizer.

The content of the adhesion enhancer may be 0.1 % by weight to 10 % by weight, 0.1 % by weight to 5 % by weight, 0.1 % by weight to 3 % by weight, or 0.1 % by weight to 2 % by weight based on the total weight of the resin composition for coating a fertilizer. When the range is satisfied, the adhesive force between the fertilizer and the coating layer may be improved so that the coating layer may be uniformly formed on the fertilizer.

The resin composition for coating a fertilizer may further include a crystallization accelerator. The crystallization accelerator may be included in a content of 100 ppm to 50,000 ppm, 100 ppm to 40,000 ppm, 100 ppm to 30,000 ppm, 100 ppm to 10,000 ppm, or 100 ppm to 6,000 ppm based on the total weight of the resin composition for coating a fertilizer.

The crystallization accelerator may include at least one of an organic nucleating agent and an inorganic nucleating agent The organic nucleating agent may refer to a nucleating agent composed of an organic compound.

The organic nucleating agent may include nanocellulose.

The content of the nanocellulose may be 10 ppm to 500 ppm, 50 ppm to 500 ppm, 50 ppm to 300 ppm, or 50 ppm to 200 ppm based on the total weight of the resin composition for coating a fertilizer. When the range is satisfied, a crystallization rate may be improved, so that adhesion between the composition during a coating process may be suppressed.

The average length of the nanocellulose may be 10 nm to 300 nm, 10 nm to 200 nm, 20 nm to 200 nm, or 30 nm to 200 nm.

The nanocellulose may be subjected to bead mill pre-treatment or ultrasonic pre-treatment. The nanocellulose may be subjected to bead mill pre-treatment and ultrasonic pre-treatment. The nanocellulose is preferably subjected to ultrasonic pre-treatment after being subjected to bead mill pre-treatment, so that re-agglomeration may be prevented and, accordingly, dispersibility may be improved.

The bead mill pre-treatment may be performed using a vertical mill or a horizontal mill as a wet milling device. The horizontal mill is preferable in that it can fill a larger amount of beads inside a chamber, reduce the uneven wear of a machine, reduce bead wear, and make maintenance easier.

The bead mill pre-treatment may be performed using beads made of one or more selected from the group consisting of zirconium, zircon, zirconia, quartz and aluminum oxide.

The bead mill pre-treatment may be performed using beads having a diameter of about 0.3 mm to about 1 mm. The diameter of the bead may be about 0.3 mm to about 0.9 mm, about 0.4 mm to about 0.8 mm, about 0.45 mm to about 0.7 mm or about 0.45 mm to about 0.6 mm. When the range is satisfied, the nanocellulose may have improved dispersibility.

The ultrasonic pretreatment is a method of physically breaking up or pulverizing nanoparticles by waves generated by emitting ultrasonic waves of 20 kHz into a solution.

The ultrasonic pre-treatment may be performed for less than 30 minutes at an output of 30,000 J/s or less. The ultrasonic pre-treatment may be performed for 25 minutes or less, 20 minutes or less or 18 minutes or less at an output of 25,000 J/s or less or 22,000 J/s or less. When the range is satisfied, the ultrasonic pre-treatment effect, i.e., dispersibility improvement, may be maximized.

The inorganic nucleating agent may refer to a nucleating agent composed of an inorganic compound.

The resin composition for coating a fertilizer may include the inorganic nucleating agent in a content of 100 ppm to 10,000 ppm, 100 ppm to 8,000 ppm, 300 ppm to 8,000 ppm, 500 ppm to 8,000 ppm, or 500 ppm to 6,000 ppm. When the range is satisfied, a crystallization rate may be improved, so that adhesion between the composition during a coating process may be suppressed.

The inorganic nucleating agent may include one or more selected from the group consisting of titanium dioxide, talc, kaolinite, montmorillonite, mica, clay, zeolite, silica, graphite, carbon black, mica, barium sulfate, calcium silicate, calcium carbonate, calcium sulfide, calcium titanate, zinc oxide, aluminum oxide, magnesium oxide, neodymium oxide,

and boron nitride.

The inorganic nucleating agent may include titanium dioxide containing an anatase phase. The titanium dioxide containing the anatase phase exhibits high photoactivity, so biodegradability may be further improved.

The average diameter ($D_{50}$) of the inorganic nucleating agent may be 0.1 $\mu$m to 0.5 $\mu$m, 0.1 $\mu$m to 0.4 $\mu$m, 0.15 $\mu$m to 0.4 $\mu$m, 0.15 $\mu$m to 0.3 $\mu$m, or 0.15 $\mu$m to 0.25 $\mu$m. When the range is satisfied, the mechanical strength of the resin composition for coating a fertilizer may be improved.

The resin composition for coating a fertilizer may further include a heat stabilizer. The heat stabilizer may be at least one selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

The content of the heat stabilizer may be 10 ppm to 3,000 ppm, 20 ppm to 2,000 ppm, 20 ppm to 1,500 ppm or 20 ppm to 1,000 ppm, compared to the total weight of the resin composition for coating a fertilizer. When the range is satisfied, the deterioration of the resin composition for coating a fertilizer due to temperature influence during the reaction process may be suppressed.

The resin composition for coating a fertilizer may further include a branching agent including at least one of a trivalent or higher alcohol and a trivalent or higher carboxylic acid.

The branching agent may react with the diol, aliphatic dicarboxylic acid, and/or aromatic dicarboxylic acid in the first biodegradable polyester resin. The branching agent may be included as a part of the molecular structure of the first biodegradable polyester resin.

The trivalent or higher alcohol may be at least one selected from the group consisting of glycerol, pentaerythritol and trimethylolpropane.

The trivalent or higher carboxylic acid may be at least one selected from the group consisting of methane tricarboxylic acid, ethanetricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, and benzene-1,2,4,5-tetracarboxylic acid.

The branching agent may include glycerol.

The content of the branching agent may be 500 ppm to 3,000 ppm, 700 ppm to 3,000 ppm, 700 ppm to 2,500 ppm, or 1,000 ppm to 2,000 ppm, compared to the total weight of the resin composition for coating a fertilizer. When the range is satisfied, the coating layer may have appropriate biodegradability and improved mechanical properties.

The content of silicon included in the resin composition for coating a fertilizer may be 1 ppm to 5,000 ppm, 10 ppm to 5,000 ppm, 100 ppm to 5,000 ppm, 100 ppm to 3,000 ppm, 100 ppm to 2,000 ppm, 100 ppm to 1,000 ppm, or 100 ppm to 500 ppm. When the range is satisfied, the adhesiveness between the resin composition for coating a fertilizer may be suppressed, and fertilizer-coating processability may be secured.

The content of silicon included in the resin composition for coating a fertilizer may be measured by inductively coupled plasma optical emission spectrometry (ICP-OES).

The resin composition for coating a fertilizer may be detected by pyrolysis gas chromatography/mass spectrometry (py-GC/MS) at 600 °C and 10 minutes, indicating a cyclic siloxane detection peak.

The cyclic siloxane may be detected over a retention time range of 2.5 to 3.5 minutes and may include one or more peaks at mass-to-charge ratios (m/z) selected from the group consisting of 73, 207, 267, 281, 341, 355, and 429.

The biodegradable polyester resin according to the present disclosure is intended for use as a resin composition for coating a fertilizer by mixing with a polybutylene succinate-based resin having a crystallinity of 27 % to 60 %, includes a diol-derived unit, an aliphatic dicarboxylic acid-derived unit, and an aromatic dicarboxylic acid-derived unit, and has a crystallinity of 10 % to 30 % as measured by differential scanning calorimetry (DSC).

The biodegradable polyester resin may further include a slip agent.

The content of the slip agent may be 0.1 phr (per hundred resin) to 10 phr, 0.1 phr to 8 phr, 0.1 phr to 5 phr, or 0.1 phr to 3 phr compared to the biodegradable polyester resin. When the range is satisfied, the adhesiveness between the resin composition for coating a fertilizer may be suppressed, and fertilizer-coating processability may be secured.

The biodegradable polyester resin may be the same as the first biodegradable polyester resin described above.

The biodegradable polyester resin is mixed with a polybutylene succinate-based resin having a crystallinity of 27 % to 60 % to be used as a resin composition for coating a fertilizer.

The biodegradable polyester resin may be mixed with a polybutylene succinate-based resin so that the crystallinity may be controlled within a certain range.

The biodegradable polyester resin may be mixed with the polybutylene succinate-based resin, so it may be suitably used as a fertilizer-coating resin composition having a release rate that is controlled within a certain period, which is functionally required in a slow-release fertilizer.

The biodegradable polyester resin and the slip agent may be the same as the first biodegradable polyester resin and slip agent described above.

The solution for coating a fertilizer according to the present disclosure may include the fertilizer-coating resin

composition described above, and a solvent having a Hansen fractionation dispersion parameter ($f_d$) 0.5 to 0.9, a Hansen fractionation polarity parameter ($f_p$) 0 to 0.3, and a Hansen fractionation hydrogen-bonding parameter ($f_h$) 0.1 to 0.4.

The resin composition for coating a fertilizer may be the same as the composition and crystallinity of the resin composition described above.

The Hansen fractionation dispersion parameter ($f_d$), the Hansen fractionation polarity parameter ($f_p$), and the Hansen fractionation hydrogen bonding parameter ($f_h$) may be calculated from Hansen solubility parameters and may be methods for defining the solubility parameters of a solvent. The Hansen fractionation dispersion parameter ($f_d$), the Hansen fractionation polarity parameter ($f_p$), and the Hansen fractionation hydrogen bonding parameter ($f_h$) may be used to standardize three Hansen solubility parameters. The sum of the Hansen fractionation dispersion parameter ($f_d$), the Hansen fractionation polarity parameter ($f_p$), and the Hansen fractionation hydrogen bonding parameter ($f_h$) is 1.

The Hansen solubility parameters are parameters that can be used to predict whether a substance will be dissolved in another substance to form a homogeneous solution. The Hansen solubility parameters may be used to identify substances that are incompatible with each other or have limited solubility. The Hansen solubility parameters may include the dispersion parameter ($\delta_d$), the polarity parameter ($\delta_p$), and the hydrogen-bonding parameter ($\delta_h$).

The Hansen solubility parameters may be converted to fractionated values in Mathematical Formulas 1 to 3 below, and the fractionated values may include the Hansen fractionation dispersion parameter ($f_d$), the Hansen fractionation polarity parameter ($f_p$), and the Hansen fractionation hydrogen bonding parameter ($f_h$).

[Mathematical Formula 1]

$$\text{Hansen fractionation dispersion parameter } (f_d) = \delta_d / (\delta_d + \delta_p + \delta_h)$$

[Mathematical Formula 2]

$$\text{Hansen fractionation polarity parameter } (f_p) = \delta_p / (\delta_d + \delta_p + \delta_h)$$

[Mathematical Formula 3]

$$\text{Hansen fractionation hydrogen bonding parameter } (f_h) = \delta_h / (\delta_d + \delta_p + \delta_h)$$

The Hansen fractionation dispersion parameter ($f_d$) may be 0.5 to 0.9, 0.6 to 0.9, 0.7 to 0.9, or 0.8 to 0.9.

The Hansen fractionation polarity parameter ($f_p$) may be 0 to 0.3, 0 to 0.2, 0 to 0.1, or 0 to 0.05.

The Hansen fractionation hydrogen bonding parameter ($f_h$) may be 0.1 to 0.4, 0.1 to 0.3, 0.1 to 0.2, or 0.1 to 0.15.

When the range is satisfied, miscibility with the resin composition for coating a fertilizer may be improved so that fertilizer-coating processability may be secured.

The content of the resin composition for coating a fertilizer may be 1 % by weight to 15 % by weight, 1 % by weight to 12 % by weight, 1 % by weight to 10 % by weight, 1 % by weight to 8 % by weight, 1 % by weight to 5 % by weight, or 2 % by weight to 5 % by weight based on the total weight of the solution for coating a fertilizer.

When the range is satisfied, miscibility with the resin composition for coating a fertilizer may be appropriate, and the amount of residual solvent may be minimized so that the solvent may be recycled more efficiently.

The slow-release fertilizer according to the present disclosure includes a fertilizer, and a coating layer formed on the fertilizer, and the coating layer includes a first biodegradable polyester resin including a diol-derived unit, an aliphatic dicarboxylic acid-derived unit, and an aromatic dicarboxylic acid-derived unit and may have a crystallinity of 10 % to 60 % as measured by differential scanning calorimetry (DSC).

There are no special restrictions on the type of the fertilizer, and the fertilizer may include nitrogen-containing organic compounds such as urea, ammonium salts such as ammonium nitrate, dihydrogen ammonium phosphate, diammonium hydrogen phosphate, ammonium sulfate and ammonium chloride, and iron salts such as ferrous nitrate, ferric nitrate, ferrous phosphate, ferric phosphate, ferrous sulfate, ferric sulfate, ferrous chloride and ferric chloride, etc.

The fertilizer is coated with the coating layer, so that the release rate of a fertilizer within a certain period, which is functionally required in a slow-release fertilizer can be controlled. In addition, after the slow-release fertilizer has served its usefulness as a fertilizer, the coating layer residues may be readily decomposed in soil and water.

The coating layer may include a second biodegradable polyester resin having a crystallinity of 27 % to 60 %.

The first biodegradable polyester resin and the second biodegradable polyester resin may be the same as the first biodegradable polyester resin and second biodegradable polyester resin described above. The crystallinity may be the same as the crystallinity described above.

The thickness of the coating layer may be 10 $\mu$m to 500 $\mu$m, 10 $\mu$m to 400 $\mu$m, 10 $\mu$m to 300 $\mu$m, 10 $\mu$m to 200 $\mu$m, 10 $\mu$m to 100 $\mu$m, 20 $\mu$m to 100 $\mu$m, 20 $\mu$m to 90 $\mu$m, or 20 $\mu$m to 80 $\mu$m. When the range is satisfied, the release rate of a fertilizer within a certain period, which is functionally required in a slow-release fertilizer, may be controlled.
The thickness deviation of the coating layer may satisfy the following calculation formula:

[calculation formula]

$$(T_{max} - T_{min}) / T_{avg} < 0.5$$

In the calculation formula, $T_{max}$ is the maximum thickness of the coating layer measured by a scanning electron microscope (SEM), $T_{min}$ is the minimum thickness of the coating layer, and $T_{avg}$ is the average thickness of the coating layer.
$(T_{max} - T_{min}) / T_{avg}$ may be 0.47 or less, 0.45 or less, 0.4 or less, 0.35 or less, or 0.3 or less.
The volume of the coating layer may be 7 % by volume to 33 % by volume, 9 % by volume to 33 % by volume, 9 % by volume to 30 % by volume, or 10 % by volume to 25 % by volume relative to the volume of the fertilizer.
When the range is satisfied, the release rate of a fertilizer within a certain period, which is functionally required in a slow-release fertilizer, may be controlled.
The coating layer may include a slip agent. The slip agent may include a silicon-based compound. The coating layer may further include an amide-based activator. The coating layer may further include an adhesion enhancer. The coating layer may further include a crystallization accelerator.
The slip agent, the silicon-based compound, the amide-based activator, the adhesion enhancer, and the crystallization accelerator may be the same as the slip agent, silicon-based compound, amide-based activator, adhesion enhancer, and crystallization accelerator described above.
The content of the coating layer may be 5 % by weight to 25 % by weight, 10 % by weight to 25 % by weight, 15 % by weight to 25 % by weight, 15 % by weight to 23 % by weight, 16 % by weight to 23 % by weight, or 17 % by weight to 23 % by weight based on the total weight of the slow-release fertilizer. When the range is satisfied, the coating layer residues may be easily decomposed in soil and water after the slow-release fertilizer has reached its usefulness as a fertilizer, and the release rate of a fertilizer within a certain period, which is functionally required in a slow-release fertilizer, may be controlled.
The content of silicon included in the coating layer may be 1 ppm to 5,000 ppm, 10 ppm to 5,000 ppm, 100 ppm to 5,000 ppm, 100 ppm to 3,000 ppm, 100 ppm to 2,000 ppm, 100 ppm to 1,000 ppm, or 100 ppm to 500 ppm. When the range is satisfied, fertilizer-coating processability may be secured.
The content of silicon included in the coating layer may be measured by inductively coupled plasma optical emission spectrometry (ICP-OES).
The coating layer may exhibit a cyclic siloxane peak as detected by pyrolysis gas chromatography/mass spectrometry (py-GC/MS) at 600 °C and 10 minutes.
The cyclic siloxane may be detected over a retention time range of 2.5 to 3.5 minutes and may include one or more peaks at mass-to-charge ratios (m/z) selected from the group consisting of 73, 207, 267, 281, 341, 355, and 429.
The coating layer has a crystallinity of 10% to 60% as measured by differential scanning calorimetry (DSC).
Preferably, the crystallinity may be 12% to 60 %, 15% to 60 %, 17 % to 60 %, 20 % to 60 %, 20 % to 50 %, 25 % to 50 %, 25 % to 40 %, or 29 % to 37.5 %. When the range is satisfied, the adhesion between the slow-release fertilizer may be suppressed after coating the fertilizer, so that fertilizer-coating processability may be secured.
The crystallinity of the coating layer according to the present disclosure may be calculated according to the method described above.
The coating layer may be derived from the fertilizer-coating resin composition described above.
A method of manufacturing the slow-release fertilizer according to the present disclosure may include a step of preparing a resin composition for coating a fertilizer, the resin composition including: a first biodegradable polyester resin that includes a diol-derived unit, an aliphatic dicarboxylic acid-derived unit, and an aromatic dicarboxylic acid-derived unit and has having a crystallinity of 10 % to 30 %; and a second biodegradable polyester resin that is different from the first biodegradable polyester resin and has a crystallinity of 27 % to 60 %; a step of preparing a solution for coating a fertilize by mixing the resin composition for coating a fertilizer with a solvent; and a step of flowing a fertilizer and the solution for coating a fertilizer to form a coating layer on the fertilizer.
The manufacturing method may include a step of preparing a resin composition for coating a fertilizer. The first biodegradable polyester resin and the second biodegradable polyester resin may be the same as the first biodegradable polyester resin and second biodegradable polyester resin described above.
A weight ratio of the first biodegradable polyester resin:the second biodegradable polyester resin may be 2:8 to 8:2, 3:7 to 7:3, 4:6 to 7:3, or 4:6 to 6:4. When the range is satisfied, the average crystallinity of the resin composition for

coating a fertilizer may be controlled within a certain range, so that adhesiveness to the fertilizer may be excellent, the release rate of the fertilizer may be controlled, and the coating processability may be improved.

The manufacturing method may include a step of mixing the resin composition for coating a fertilizer with a solvent to manufacture a solution for coating a fertilizer.

The resin composition for coating a fertilizer and the solvent may be the same as the resin composition for coating a fertilizer and the solvent described above.

The content of the resin composition for coating a fertilizer may be 1 % by weight to 15 % by weight, 1 % by weight to 12 % by weight, 1 % by weight to 10 % by weight, 1 % by weight to 8 % by weight, 1 % by weight to 5 % by weight, or 2 % by weight to 5 % by weight based on the total weight of the solution for coating a fertilizer.

When the range is satisfied, miscibility with resin composition for coating a fertilizer may be appropriate, and the amount of residual solvent may be minimized so that the solvent may be recycled more efficiently.

The manufacturing method may include a step of flowing a fertilizer and the solution for coating a fertilizer to form a coating layer on the fertilizer.

The fertilizer may be the same as the fertilizer described above.

The fertilizer and the solution for coating a fertilizer may be subjected to spray coating or drum coating so that a coating layer may be formed on the fertilizer.

The spray coating may be a process of forming a coating layer on the fertilizer by spraying the fertilizer-coating solution after flowing the fertilizer under hot air conditions. A coating layer may be uniformly formed on the slow-release fertilizer manufactured by the spray coating.

The specific gravity of the solvent used in the spray coating may be 0.5 g/cm$^3$ or more and 1.5 g/cm$^3$ or less, 0.5 g/cm$^3$ or more and 1.48 g/cm$^3$ or less, or 0.5 g/cm$^3$ or more and 1.0 g/cm$^3$ or less. When the range is satisfied, the solvent may be easily evaporated in the coating process so that the process efficiency may be improved. In addition, the amount of residual solvent may be minimized so that the solvent may be recycled more efficiently.

The drum coating may be a process of forming a coating layer on the fertilizer by putting the fertilizer into a drum-shaped housing, fluidizing the housing under hot air conditions, and then putting the fertilizer-coating solution thereinto. In the drum coating, a solvent having a high specific gravity may be more appropriately used, and the thickness of the coating layer may be easily controlled.

In the drum coating, the specific gravity of the solvent may be 1.0 g/cm$^3$ or more to 2.0 g/cm$^3$ or less, 1.0 g/cm$^3$ or more to 1.8 g/cm$^3$ or less, or 1.4 g/cm$^3$ or more to 1.8 g/cm$^3$ or less. When the range is satisfied, the thickness of the coating layer may be easily controlled in the coating process.

The spray coating or the drum coating may be performed at 5 °C to 80 °C. The spray coating may be performed at 5 °C to 50 °C, 5 °C to 40 °C, 5 °C to 30 °C, 5 °C to 25 °C, 5 °C to 20 °C, or 5 °C to 15 °C. The drum coating may be performed at 40 °C to 70 °C, 40 °C to 65 °C, 40 °C to 62 °C, or 40 °C to 60 °C.

A difference between the hot air temperature and the boiling point of the solvent may be 10 °C or lower, 8 °C or lower, 6 °C or lower, or 5 °C or lower.

When the range is satisfied, the solvent may be easily volatilized and the amount of residual solvent may be minimized, so that the solvent may be recycled more efficiently.

After forming a coating layer on the fertilizer, a step of filtering with a mesh filter having pores of 100 $\mu$m to 1,000 $\mu$m, 150 $\mu$m to 1,000 $\mu$m, 200 $\mu$m to 1,000 $\mu$m, or 200 $\mu$m to 900 $\mu$m, and a step of drying at room temperature may be further performed.

By the filtration step and the drying step, the coating layer may be formed more densely and uniformly.

After forming a coating layer on the fertilizer, a step of condensing and recovering the solvent contained in the solution for coating a fertilizer may be further included.

The process of condensing the solvent is not particularly limited, and the solvent may be recovered through a separate condenser. The temperature of the condenser may be 0 °C to 10 °C.

Hereinafter, the present disclosure will be described in more detail based on the following examples and comparative examples. However, the examples and comparative examples are provided only as examples to explain the present disclosure in more detail, and the present disclosure is not limited by the following examples and comparative examples.

### Manufacturing examples - Manufacture of solutions for coating fertilizer

### Manufacturing Example 1

50 parts by weight of polybutylene adipate terephthalate (PBAT) #1 (number average molecular weight: 62,000 g/mol, crystallinity: 15 %) and 50 parts by weight of polybutylene succinate (PBS) #1 (number average molecular weight: 45,000 g/mol, crystallinity: 50 %) were mixed to prepare a resin composition for coating a fertilizer.

Next, a solution for coating a fertilizer was manufactured such that the concentration of the fertilizer-coating resin

composition was 5 % by weight in chloroform having a Hansen fractionation dispersion parameter ($f_d$) of 0.85, a Hansen fractionation polarity parameter ($f_p$) of 0.02, and a Hansen fractionation hydrogen bonding parameter ($f_h$) of 0.13.

**Manufacturing Example 2**

The first biodegradable polyester resin was prepared by mixing silicon powder (Dow Co., EP2601) in a content of 0.5 phr in PBAT #2 (number average molecular weight: 40,000 g/mol, crystallinity: 20 %).
A resin composition for coating a fertilizer was prepared by mixing 50 parts by weight of the first biodegradable polyester resin and 50 parts by weight of PBS #1.

**Manufacturing Example 3**

The first biodegradable polyester resin was prepared by mixing silicon powder (Dow Co., EP2601) in a content of 0.4 phr in PBAT #2 (number average molecular weight 40,000 g/mol, crystallinity 20 %).
A resin composition for coating a fertilizer was prepared by mixing 40 parts by weight of the first biodegradable polyester resin and 60 parts by weight of PBS #1.

**Comparative Manufacturing Example 1**

A solution for coating a fertilizer was manufactured in the same manner as in Manufacturing Example 1, except that 90 parts by weight of polyethylene (PE, number average molecular weight: 81,000 g/mol, crystallinity: 60 %) and 10 parts by weight of polyvinyl alcohol (PVA, acetate content: 30 %, number average molecular weight: 25,000 g/mol, crystallinity: 25 %) were mixed instead of 50 parts by weight of PBAT #1 and 50 parts by weight of PBS #1 of Manufacturing Example 1, tetrachloroethylene was used instead of a chloroform solvent, and the resin composition for coating a fertilizer was used at a concentration of 10% by weight instead of 5% by weight.

**Comparative Manufacturing Example 2**

A solution for coating a fertilizer was manufactured in the same manner as in Comparative Manufacturing Example 1, except that 100 parts by weight of PVA were used instead of 90 parts by weight of PE and 10 parts by weight of PVA in Comparative Manufacturing Example 1, and water was used instead of the tetrachloroethylene solvent in Comparative Manufacturing Example 1.

**First examples - Manufacture of slow-release fertilizers**

**Example 1-1**

Urea was injected into a fluid spray-coating device. Next, the air inside the fluid spray-coating device was circulated under a temperature condition of 10 °C to allow the urea to flow.
The solution for coating a fertilizer according to Manufacturing Example 1 was sprayed for about 15 minutes, and the solution for coating a fertilizer was coated on the surface of the urea. Next, after stopping the spray injection, drying was performed for 10 minutes to produce a slow-release fertilizer with a coating thickness of about 150 $\mu$m.

**Example 1-2**

Urea was injected into a fluid spray-coating device. Next, the air inside the fluid spray-coating device was circulated under a temperature condition of 10 °C to allow the urea to flow.
The solution for coating a fertilizer according to Manufacturing Example 2 was sprayed for about 5 minutes, and the solution for coating a fertilizer was coated on the surface of the urea. Next, after stopping the spray injection, drying was performed for 10 minutes to produce a slow-release fertilizer with a coating thickness of about 50 $\mu$m.

**Example 1-3**

Urea was injected into a fluid spray-coating device. Next, the air inside the fluid spray-coating device was circulated under a temperature condition of 10 °C to allow the urea to flow.
The solution for coating a fertilizer according to Manufacturing Example 2 was sprayed for about 10 minutes, and the solution for coating a fertilizer was coated on the surface of the urea. Next, after stopping the spray injection, drying was performed for 10 minutes to produce a slow-release fertilizer with a coating thickness of about 100 $\mu$m.

**Example 1-4**

Urea was injected into a fluid spray-coating device. Next, the air inside the fluid spray-coating device was circulated under a temperature condition of 25 °C to allow the urea to flow.

The solution for coating a fertilizer according to Manufacturing Example 3 was sprayed for about 5 minutes, and the solution for coating a fertilizer was coated on the surface of the urea. Next, after stopping the spray injection, drying was performed for 10 minutes to produce a slow-release fertilizer with a coating thickness of about 50 $\mu$m.

**Example 1-5**

Urea was injected into a fluid spray-coating device. Next, the air inside the fluid spray-coating device was circulated under a temperature condition of 25 °C to allow the urea to flow.

The solution for coating a fertilizer according to Manufacturing Example 3 was sprayed for about 10 minutes, and the solution for coating a fertilizer was coated on the surface of the urea. Next, after stopping the spray injection, drying was performed for 10 minutes to produce a slow-release fertilizer with a coating thickness of about 100 $\mu$m.

**Example 1-6**

Urea was injected into a fluid spray-coating device. Next, the air inside the fluid spray-coating device was circulated under a temperature condition of 25 °C to allow the urea to flow.

The solution for coating a fertilizer according to Manufacturing Example 3 was sprayed for about 20 minutes, and the solution for coating a fertilizer was coated on the surface of the urea. Next, after stopping the spray injection, drying was performed for 10 minutes to produce a slow-release fertilizer with a coating thickness of about 200 $\mu$m.

**Comparative Example 1-1**

Urea was injected into a fluid spray-coating device. Next, the air inside the fluid spray-coating device was circulated under a temperature condition of 10 °C to allow the urea to flow.

The solution for coating a fertilizer according to Comparative Manufacturing Example 1 was sprayed for about 15 minutes, and the solution for coating a fertilizer was coated on the surface of the urea. Next, after stopping the spray injection, drying was performed for 10 minutes to produce a slow-release fertilizer with a coating thickness of about 150 $\mu$m.

**Comparative Example 1-2**

Urea was injected into a drum-coating device. Next, a polyurethane (number average molecular weight: 38,000 g/mol) solution for coating a fertilizer produced by the polymerization reaction of polyol and methylene diphenyl diisocyanate (MID) at 60 °C was added to coat the solution on the surface of the urea. Next, the rotation of the drum-coating device was stopped, and then drying was performed for 10 minutes to produce a slow-release fertilizer with a coating thickness of about 400 $\mu$m.

**Comparative Example 1-3**

Urea was injected into a fluid spray-coating device. Next, the air inside the fluid spray-coating device was circulated under a temperature condition of 50 °C to allow the urea to flow.

The solution for coating a fertilizer according to Comparative Manufacturing Example 2 was sprayed for about 15 minutes, and the solution for coating a fertilizer was coated on the surface of the urea. Next, after stopping the spray injection, drying was performed for 10 minutes to produce a slow-release fertilizer with a coating thickness of about 500 $\mu$m.

**First examples**

**Experimental Example 1-1 - Crystallinity**

The crystallinity of the resin composition for coating a fertilizer used in each of Examples 1-1 to 1-6 and Comparative Examples 1-1 to 1-3 was measured. Specifically, the crystallinity was calculated as the percentage of a melting enthalpy ($\Delta H_m$) measured using differential scanning calorimetry (DSC) according to ASTM D-3417 divided by the melting enthalpy ($\Delta H_c$) of a 100% crystal. Results are shown in Table 1 below.

**Experimental Example 1-2 - Biodegradability evaluation (compost conditions)**

The biodegradability of the slow-release fertilizer manufactured in each of Examples 1-1 to 1-6 and Comparative Examples 1-1 to 1-3 was measured under compost conditions for 6 months according to ISO 14855. Results are shown in Table 1 below.

**Experimental Example 1-3 - Evaluation of release characteristics**

5 g of the slow-release fertilizer manufactured in each of Examples 1-1 to 1-6 and Comparative Examples 1-1 to 1-3 was added to 495 ml of distilled water at pH 7 and then sealed.

Next, the concentration of urea was measured at 5-day intervals using a urea concentration meter, and then the concentration of nitrogen was converted based on the urea concentration to measure the content of nitrogen released from the slow-release fertilizer. The period for which the content of nitrogen released from the slow-release fertilizer reached 80% or more compared to the initial content of nitrogen in the slow-release fertilizer was evaluated. Results are shown in Table 1 below.

**Experimental Example 1-4 - Processability evaluation (coating uniformity)**

100 particles of the slow-release fertilizer manufactured in each of Examples 1-1 to 1-6 and Comparative Examples 1-1 to 1-3 were contained in 100 beakers, respectively, and then distilled water was added to each of the beakers at a rate of 20 ml/min. After adding 100 ml of distilled water, the number of slow-release fertilizer particles floating on the surface of the distilled water was checked and evaluated according to the following criteria. Results are shown in Table 1 below.

- ◦: Less than 10 particles
- △: 10 particles or more and less than 30
- ×: 30 particles or more

**Experimental Example 1-5 - Adhesion occurrence evaluation (during coating)**

During the manufacturing process of the slow-release fertilizer according to each of Examples 1-1 to 1-6 and Comparative Examples 1-1 to 1-3, the occurrence of adhesion in the solution for coating a fertilizer was visually observed and evaluated according to the following criteria. Results are shown in Table 1 below.

- Satisfactory: No adhesion
- Poor: Adhesion occurred

**Experimental Example 1-6 - Adhesion occurrence evaluation (after production of slow-release fertilizer)**

The occurrence of adhesion between the slow-release fertilizer particles manufactured in each of Examples 1-1 to 1-6 and Comparative Examples 1-1 to 1-3 was visually observed and evaluated according to the following criteria. Results are shown in Table 1 below.

- Satisfactory: No adhesion
- Poor: Adhesion occurred

[Table 1]

| Classification | Crystallinity | Biodegradability evaluation (compost conditions) | Emission characteristics evaluation | Processability evaluation | Adhesion occurrence evaluation | |
|---|---|---|---|---|---|---|
| | | | | | During coating | After production of slow-release fertilizer |
| Unit | % | | Day | - | | |
| Example 1-1 | 32.5 | 92.1 | 60 | ○ | Satisfactory | Satisfactory |

(continued)

| Classification | Crystallinity | Biodegradability evaluation (compost conditions) | Emission characteristics evaluation | Processability evaluation | Adhesion occurrence evaluation | |
|---|---|---|---|---|---|---|
| | | | | | During coating | After production of slow-release fertilizer |
| Unit | % | | Day | - | | |
| Example 1-2 | 35 | 93.2 | 20 | ○ | Satisfactory | Satisfactory |
| Example 1-3 | 35 | 93.5 | 60 | ○ | Satisfactory | Satisfactory |
| Example 1-4 | 38 | 92.1 | 60 | ○ | Satisfactory | Satisfactory |
| Example 1-5 | 38 | 92.8 | 90 | ○ | Satisfactory | Satisfactory |
| Example 1-6 | 38 | 91.9 | 120 | ○ | Satisfactory | Satisfactory |
| Comparative Example 1-1 | 56.8 | 1.5 | 60 | ○ | Satisfactory | Satisfactory |
| Comparative Example 1-2 | - | 4.2 | 60 | ○ | Satisfactory | Satisfactory |
| Comparative Example 1-3 | 20 | 41.5 | 30 | △ | Poor | Poor |
| 1), 2) N.A.: All released before evaluation | | | | | | |

As shown in Table 1, it was confirmed that the slow-release fertilizers of Examples 1-1 to 1-6 made of the fertilizer-coating resin composition that included the first biodegradable polyester resin including a diol-derived unit, an aliphatic dicarboxylic acid-derived unit, and an aromatic dicarboxylic acid-derived unit and had a crystallinity of 10 % to 60 % had excellent biodegradability compared to the slow-release fertilizers of Comparative Examples 1-1 to 1-3.

In addition, it was confirmed that the slow-release fertilizers of Examples 1-1 to 1-6 had excellent processability, and adhesion was suppressed during the coating process and after the production of the slow-release fertilizer.

Further, it was confirmed that the slow-release fertilizers of Examples 1-1 to 1-6 had excellent biodegradability, and their release rates within a certain period, which are functionally required in the fertilizer and depend upon the thickness of the coating layer, were controlled.

**Second examples**

**Example 2-1**

A fertilizer-coating resin composition including 50 parts by weight of polybutylene adipate terephthalate (PBAT) #1 (number average molecular weight 62,000 g/mol, crystallinity 15 %) and 50 parts by weight of polybutylene succinate (PBS) #1 (number average molecular weight 45,000 g/mol, crystallinity 50 %) was prepared.

Next, a solution for coating a fertilizer was prepared such that the concentration of the fertilizer-coating composition was 5 % by weight in chloroform having a Hansen fractionation dispersion parameter ($f_d$) of 0.85, a Hansen fractionation polarity parameter ($f_p$) of 0.02, and a Hansen fractionation hydrogen bonding parameter ($f_h$) of 0.13.

Next, after putting urea into the fluid spray-coating device, the air inside the fluid spray-coating device was circulated to cause the urea to flow at 10°C.

Next, the solution for coating a fertilizer was sprayed for about 15 minutes to coat the surface of the urea with the solution for coating a fertilizer. Next, after stopping the spraying, drying was performed for 10 minutes to produce a slow-release fertilizer with a coating thickness of about 150 $\mu$m.

**Examples 2-2 to 2-6 and Comparative Examples 2-1 to 2-3**

Slow-release fertilizers were manufactured by the same process as Example 2-1, except for the compositions and concentrations of resin compositions for coating a fertilizer, the types and properties of solvents, process conditions, and the thicknesses of coating layers, as shown in Table 2 below.

In addition, Table 3 below shows the components and properties of the manufactured slow-release fertilizers, etc.

[Table 2]

| Classification | Resin composition for coating fertilizer | | | Solvent | | | | | | Process conditions | |
|---|---|---|---|---|---|---|---|---|---|---|---|
| | Resin | Slip agent[1] | Concentration[2] | $f_d$[3] | $f_p$[4] | $f_h$[5] | 25°C specific gravity | Bp[6] | Type | Coating method | Temperature |
| Unit | - | phr[7] | % by weight | - | | | $g/cm^3$ | °C | - | | °C |
| Example 2-1 | 50 parts by weight of PBAT#1[8] + 50 parts by weight of PBS#1[9] | - | 5 | 0. 85 | 0. 02 | 0. 13 | 1.49 | 61 | Chloroform | Fluid spray coating | 10 |
| Example 2-2 | 50 parts by weight of PBAT#2[10] + 50 parts by weight of PBS#2[11] | 0.5 | 1 | 0. 85 | 0. 02 | 0. 13 | 1.49 | 61 | Chloroform | Fluid spray coating | 10 |
| Example 2-3 | 50 parts by weight of PBAT#2 + 50 parts by weight of PBS#2 | 0.5 | 3 | 0. 85 | 0. 02 | 0. 13 | 1.49 | 61 | Chloroform | Fluid spray coating | 10 |

(continued)

| Classification | Resin composition for coating fertilizer | | | Solvent | | | | | | Process conditions | |
|---|---|---|---|---|---|---|---|---|---|---|---|
| | Resin | Slip agent[1] | Concentration[2] | $f_d$[3] | $f_p$[4] | $f_h$[5] | 25°C specific gravity | Bp[6] | Type | Coating method | Temperature |
| Unit | - | phr[7] | % by weight | - | | | g/cm3 | °C | - | | °C |
| Example 2-4 | 40 parts by weight of PBAT#2 + 60 parts by weight of PBS#2 | 0.4 | 1 | 0. 85 | 0. 02 | 0. 13 | 1.49 | 61 | Chloroform | Fluid spray coating | 10 |
| Example 2-5 | 40 parts by weight of PBAT#2 + 60 parts by weight of PBS#2 | 0.4 | 5 | 0. 85 | 0. 02 | 0. 13 | 1.49 | 61 | Chloroform | Fluid spray coating | 10 |
| Example 2-6 | 40 parts by weight of PBAT#2 + 60 parts by weight of PBS#2 | 0.4 | 5 | 0. 85 | 0. 02 | 0. 13 | 1.49 | 61 | Chloroform | Fluid spray coating | 25 |
| Comparative Example 2-1 | 90 parts by weight of PE[12] + 10 parts by weight of PVA[13] | - | 10 | 0. 80 | 0. 07 | 0. 13 | 1.46 | 87 | TCE[14] | Fluid spray coating | 10 |
| Comparative Example 2-2 | 100 parts by weight of PU[15] | - | - | - | - | - | - | - | - | Drum coating | 60 |

(continued)

| Classification | Resin composition for coating fertilizer | | | Solvent | | | | | | Process conditions | |
|---|---|---|---|---|---|---|---|---|---|---|---|
| | Resin | Slip agent1) | Concentration2) | $f_d$ 3) | $f_p$ 4) | $f_h$ 5) | 25°C specific gravity | Bp 6) | Type | Coating method | Temperature |
| Unit | - | phr7) | % by weight | - | | | g/cm3 | °C | - | | °C |
| Comparative Example 2-3 | 100 parts by weight of PVA | - | 10 | 0. 68 | 0. 12 | 0. 20 | 1.00 | 10 0 | water | Fluid spray coating | 50 |

1) Slip agent: Silicon powder (CAS No. 153890-18-7)
2) Concentration: Concentration of fertilizer-coating resin composition in fertilizer-coating solution
3) $f_d$: Hansen fractionation dispersion parameter
4) $f_p$: Hansen fractionation polarity parameter
5) $f_h$: Hansen fractionation hydrogen bonding parameter
6) bp: Boiling point
7) phr: Per hundred resin, content of slip agent compared to total resin content
8) PBAT#1: Polybutylene adipate terephthalate, number average molecular weight: 62,000 g/mol, crystallinity: 15 %
9) PBS#1: Polybutylene succinate, number average molecular weight: 45,000 g/mol, crystallinity: 50 %
10) PBAT#2: Number average molecular weight: 40,000 g/mol, crystallinity: 20 %
11) PBS#2: Number average molecular weight: 45,000 g/mol, crystallinity: 30 %
12) PE: Polyethylene, number average molecular weight 81,000 g/mol, crystallinity 60 %
13) PVA: Polyvinyl alcohol, acetate content: 30 %, number average molecular weight: 25,000 g/mol, crystallinity: 25 %
14) PCE: Perchloroethylene
15) PU: Polyurethane, number average molecular weight: 38,000 g/mol, two-component polymerization of polyol and methylene diphenyl diisocyanate (MID)

[Table 3]

| Classification | Slow-release fertilizer | | | | |
|---|---|---|---|---|---|
| | Main component of fertilizer | Coating layer | | | |
| | | Whether biodegradable resin is included | Resin type | Crystallinity1) | Average thickness |
| Unit | - | | | % | μm |
| Example 2-1 | urea | ○ | PBAT+PBS | 32.5 | 150 |
| Example 2-2 | urea | ○ | PBAT+PBS | 25 | 50 |
| Example 2-3 | urea | ○ | PBAT+PBS | 25 | 100 |
| Example 2-4 | urea | ○ | PBAT+PBS | 26 | 50 |
| Example 2-5 | urea | ○ | PBAT+PBS | 26 | 100 |
| Example 2-6 | urea | ○ | PBAT+PBS | 26 | 200 |
| Comparative Example 2-1 | urea | × | PE+PVA | 56.5 | 150 |
| Comparative Example 2-2 | urea | × | PU | - | 400 |

(continued)

| Classification | Slow-release fertilizer | | | | |
|---|---|---|---|---|---|
| | Main component of fertilizer | Coating layer | | | |
| | | Whether biodegradable resin is included | Resin type | Crystallinity[1)] | Average thickness |
| Unit | - | | | % | $\mu$m |
| Comparative Example 2-3 | urea | × | PVA | 20 | 500 |
| 1) Crystallinity: Percentage of melting enthalpy ($\Delta H_m$) measured using differential scanning calorimetry (DSC) divided by melting enthalpy ($\Delta H_c$) of 100% crystal | | | | | |

**Second examples**

**Experimental Example 2-1 - Coating reliability evaluation**

For each of the 100 slow-release fertilizers manufactured in each of Examples 2-1 to 2-6 and Comparative Examples 2-1 to 2-3, the occurrence of pinholes in the coating layer was evaluated according to the following criteria. The results are shown in Table 4 below.

- ◎: Not observed
- △: 5 or less
- ×: Greater than 5

**Experimental Example 2-2 - Solubility evaluation of resin composition for coating fertilizer**

The solubility of the fertilizer-coating resin composition of each of Examples 2-1 to 2-6 and Comparative Examples 2-1 to 2-3 in a solvent was evaluated according to the following criteria. Results are shown in Table 4 below.

- ◎: No sedimentation after producing solution for coating fertilizer
- △: Some sediments occurred after producing solution for coating fertilizer
- ×: Layer separation occurred in solution for coating fertilizer

**Experimental Example 2-3 - processability evaluation**

The spray processability of the fertilizer-coating solution of each of Examples 2-1 to 2-6 and Comparative Examples 2-1 to 2-3 was evaluated according to the following criteria. Results are shown in Table 4 below.

- ○: Spray process smooth
- ×: Spray nozzle clogged

**Experimental Example 2-4 - Coating uniformity evaluation**

100 particles of the slow-release fertilizer manufactured in each of Examples 2-1 to 2-6 and Comparative Examples 2-1 to 2-3 were contained in 100 beakers, respectively, and then distilled water was added to each of the beakers at a rate of 20 ml/min. After adding 100 ml of distilled water, the number of slow-release fertilizer particles floating on the surface of the distilled water was checked and evaluated according to the following criteria. Results are shown in Table 4 below.

- ○: Less than 10 particles
- △: 10 particles or more and less than 30
- ×: 30 particles or more

**Experimental Example 2-5 - biodegradability evaluation (compost conditions)**

For each of the slow-release fertilizers manufactured in Examples 2-1 to 2-6 and Comparative Examples 2-1 to 2-3, its biodegradability was measured for 6 months under compost conditions according to ISO 14855. Results are shown in Table 4 below.

**Experimental Example 2-6 - Release characteristics evaluation**

5 g of each of the slow-release fertilizers prepared in Examples 2-1 to 2-6 and Comparative Examples 2-1 to 2-3 was added to 495 ml of distilled water at pH 7 and then sealed.

Next, the concentration of urea was measured at 5-day intervals using a urea concentration meter, and then the concentration of nitrogen was converted based on the urea concentration to measure the content of nitrogen released from the slow-release fertilizer. The period for which the content of nitrogen released from the slow-release fertilizer reached 80% or more compared to the initial content of nitrogen in the slow-release fertilizer was evaluated. Results are shown in Table 4 below.

**Experimental Example 2-7 - Adhesion occurrence evaluation (during coating)**

During the manufacturing process of the slow-release fertilizer according to each of Examples 2-1 to 2-6 and Comparative Examples 2-1 to 2-3, the occurrence of adhesion in the solution for coating a fertilizer was visually observed and evaluated according to the following criteria. Results are shown in Table 4 below.

- Satisfactory: No adhesion
- Poor: Adhesion occurred

**Experimental Example 2-8 - Adhesion occurrence evaluation (after production of slow-release fertilizer)**

The occurrence of adhesion between the slow-release fertilizer particles manufactured in each of Examples 2-1 to 2-6 and Comparative Examples 2-1 to 2-3 was visually observed and evaluated according to the following criteria. Results are shown in Table 4 below.

- Satisfactory: No adhesion

- Poor: Adhesion occurred

[Table 4]

| Classific ation | Coatin g reliabil ity evaluat ion | Solubil ity evaluat ion | Processa bility evaluatio n | Coatin g unifor mity evaluat ion | Biodegrada bility evaluation (compost conditions) | Release characteri stics evaluatio n | Adhesion occurrence evaluation | |
|---|---|---|---|---|---|---|---|---|
| | | | | | | | During coating | After product ion of slow-release fertilize r |
| Unit | - | | | | % | Day | - | |
| Example 2-1 | ◎ | ◎ | O | ○ | 92.1 | 60 | Satisfac tory | Satisfac tory |
| Example 2-2 | ◎ | ◎ | O | ○ | 93.2 | 20 | Satisfac tory | Satisfac tory |
| Example 2-3 | ◎ | ◎ | O | ○ | 93.5 | 60 | Satisfac tory | Satisfac tory |
| Example 2-4 | ◎ | ◎ | O | ○ | 92.1 | 60 | Satisfac tory | Satisfac tory |

(continued)

| Classification | Coating reliability evaluation | Solubility evaluation | Processability evaluation | Coating uniformity evaluation | Biodegradability evaluation (compost conditions) | Release characteristics evaluation | Adhesion occurrence evaluation | |
|---|---|---|---|---|---|---|---|---|
| | | | | | | | During coating | After production of slow-release fertilizer |
| Unit | - | | | | % | Day | - | |
| Example 2-5 | ◎ | ◎ | O | ○ | 92.8 | 90 | Satisfactory | Satisfactory |
| Example 2-6 | ◎ | ◎ | O | ○ | 91.9 | 120 | Satisfactory | Satisfactory |
| Comparative Example 2-1 | △ | ◎ | ○ | ○ | 1.5 | 60 | Satisfactory | Satisfactory |
| Comparative Example 2-2 | △ | ◎ | - | O | 4.2 | 60 | Satisfactory | Satisfactory |
| Comparative Example 2-3 | △ | ◎ | ○ | △ | 41.5 | 30 | Satisfactory | Satisfactory |

As shown in Tables 2 to 4, it was confirmed that the slow-release fertilizers of Examples 2-1 to 2-6 that included the first biodegradable polyester resin including a diol-derived unit, an aliphatic dicarboxylic acid-derived unit, and an aromatic dicarboxylic acid-derived unit; and the coating layer having a crystallinity of 10 % to 60 % and formed on the fertilizer had excellent biodegradability, compared to the slow-release fertilizers of Comparative Examples 2-1 to 2-3.

In addition, it was confirmed that the slow-release fertilizers of Examples 2-1 to 2-6 had excellent processability, and adhesion was suppressed during the coating process and after the production of the slow-release fertilizer.

Further, it was confirmed that the slow-release fertilizers of Examples 2-1 to 2-6 had excellent biodegradability, and their release rates within a certain period, which are functionally required in the fertilizer and depend upon the thickness of the coating layer, were controlled.

A resin composition for coating a fertilizer according to the present disclosure and a slow-release fertilizer including the same include a biodegradable polyester resin that is eco-friendly, has excellent adhesiveness to fertilizer due to crystallinity that can be controlled within a certain range, can control the release rate of fertilizer, and has excellent coating processability.

The solution for coating a fertilizer according to the present disclosure includes a solvent that has Hansen fractionation parameters within certain ranges and, accordingly, has excellent miscibility with the biodegradable polyester resin.

After a slow-release fertilizer produced using the solution for coating a fertilizer has served its usefulness as a fertilizer, the coating residue can be easily decomposed in the soil and water. In addition, the adhesiveness between the fertilizer and the coating layer is excellent, the adhesiveness between the resin composition for coating a fertilizer can be suppressed so that the fertilizer-coating processability can be secured, and the adhesion between the slow-release fertilizer after coating the fertilizer can be suppressed.

The slow-release fertilizer according to the present disclosure has a coating layer thickness within a certain range so that the coating layer can be uniformly formed on the fertilizer. Accordingly, the release rate of a fertilizer within a certain period, which is functionally required in a slow-release fertilizer, can be controlled.

The manufacturing method according to the present disclosure has excellent miscibility with the first and second biodegradable polyester resins by using a solvent having a certain range of Hansen fractionation parameters.

The manufacturing method according to the present disclosure can easily volatilize a solvent by controlling a temperature range depending upon a coating method, and minimize the amount of residual solvent so that the solvent can be recycled more efficiently.

## Claims

1. A resin composition for coating a fertilizer, the resin composition comprising: a first biodegradable polyester resin comprising a diol-derived unit, an aliphatic dicarboxylic acid-derived unit, and an aromatic dicarboxylic acid-derived unit,
wherein the resin composition has a crystallinity of 10 % to 60 % as measured by differential scanning calorimetry (DSC).

2. The resin composition according to claim 1, wherein the resin composition for coating a fertilizer comprises a second biodegradable polyester resin having a crystallinity of 27 % to 60 %.

3. The resin composition according to claim 1, further comprising a slip agent.

4. The resin composition according to claim 3, wherein the slip agent comprises a silicon-based compound.

5. The resin composition according to claim 1, wherein the resin composition for coating a fertilizer has a viscosity range of 50 cPs to 150 cPs according to measurement conditions below:
[Measurement conditions]

    1) Viscometer: RVDV-II (BROOKFIELD Co.), Spindle 62
    2) RPM: 30 rpm (10 sec)
    3) Measurement temperature: 25 °C
    4) Concentration: 5 % by weight ($CHCl_3$ solvent)

6. A biodegradable polyester resin for use as a resin composition for coating a fertilizer, the biodegradable polyester resin being mixed with a polybutylene succinate-based resin having a crystallinity of 27 % to 60 %,
wherein the biodegradable polyester resin comprises a diol-derived unit, an aliphatic dicarboxylic acid-derived unit, and an aromatic dicarboxylic acid-derived unit and has a crystallinity of 10 % to 30 % as measured by differential scanning calorimetry (DSC).

7. The biodegradable polyester resin according to claim 6, further comprising a slip agent.

8. The biodegradable polyester resin according to claim 7, wherein the slip agent is comprised in a content of 0.1 phr (per hundred resin) to 10 phr compared to the biodegradable polyester resin.

9. A slow-release fertilizer, comprising:

    a fertilizer; and
    a coating layer formed on the fertilizer,
    wherein the coating layer comprises a first biodegradable polyester resin comprising a diol-derived unit, an aliphatic dicarboxylic acid-derived unit, and an aromatic dicarboxylic acid-derived unit, and
    the coating layer has a crystallinity of 10 % to 60 % as measured by differential scanning calorimetry (DSC).

10. The slow-release fertilizer according to claim 9, wherein the first biodegradable polyester resin has a crystallinity of 10 % to 30 %.

11. The slow-release fertilizer according to claim 9, wherein the coating layer further comprises a slip agent.

12. The slow-release fertilizer according to claim 11, wherein the slip agent comprises a silicon-based compound.

13. The slow-release fertilizer according to claim 11, wherein the slip agent is comprised in a content of 0.1 phr (per hundred resin) to 10 phr compared to the first biodegradable polyester resin.

14. The slow-release fertilizer according to claim 9, wherein the coating layer further comprises a second biodegradable polyester resin having a crystallinity of 27 % to 60 % as measured by differential scanning calorimetry (DSC).

15. The slow-release fertilizer according to claim 9, wherein the coating layer is derived from a resin composition for coating a fertilizer, wherein the resin composition for coating a fertilizer has a viscosity range of 50 cPs to 150 cPs

according to measurement conditions below:
[Measurement conditions]

1) Viscometer: RVDV-II (BROOKFIELD Co.), Spindle 62
2) RPM: 30 rpm (10 sec)
3) Measurement temperature: 25 °C
4) Concentration: 5 % by weight ($CHCl_3$ solvent)

Europäisches Patentamt
European Patent Office
Office européen des brevets

# EUROPEAN SEARCH REPORT

Application Number
EP 25 17 4936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 009027 A (JCAM AGRI CO LTD) 19 January 2023 (2023-01-19) * paragraphs [0009], [0051]; example 7 * ----- | 1-6,9-15 | INV. C05G5/10 C05G5/30 C08G63/16 C08G63/183 C08G67/02 C08J7/04 C09D167/00 |
| X | EP 3 991 864 A1 (GAIA HOLDING AB [SE]) 4 May 2022 (2022-05-04) * paragraphs [0033] - [0036] * ----- | 1-3,6-8 | |
| X | US 2022/388927 A1 (KANNAN GANESH [US] ET AL) 8 December 2022 (2022-12-08) * examples 1,4 * ----- | 1,3,9,11 | |
| X,P | WO 2024/262832 A1 (SK LEAVEO CO LTD [KR]) 26 December 2024 (2024-12-26) * tables 7,8,10,12 * ----- | 1-4 | |

TECHNICAL FIELDS SEARCHED (IPC)

C05G
A01N
C09J
C08J
C08G
C09D

The present search report has been drawn up for all claims

| Place of search | Date of completion of the search | Examiner |
|---|---|---|
| The Hague | 16 September 2025 | Kampatsikas, Ioannis |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 17 4936

This annex lists the patent family members relating to the patent documents cited in the above-mentioned European search report. The members are as contained in the European Patent Office EDP file on
The European Patent Office is in no way liable for these particulars which are merely given for the purpose of information.

16-09-2025

| Patent document cited in search report | Publication date | Patent family member(s) | Publication date |
|---|---|---|---|
| JP 2023009027 A | 19-01-2023 | NONE | |
| EP 3991864 A1 | 04-05-2022 | EP 3991864 A1 | 04-05-2022 |
| | | WO 2022090073 A1 | 05-05-2022 |
| US 2022388927 A1 | 08-12-2022 | AR 100281 A1 | 21-09-2016 |
| | | AR 120567 A2 | 23-02-2022 |
| | | AU 2015257345 A1 | 10-11-2016 |
| | | AU 2019246803 A1 | 31-10-2019 |
| | | AU 2021232664 A1 | 07-10-2021 |
| | | AU 2023222997 A1 | 21-09-2023 |
| | | BR 112016025719 A2 | 15-08-2017 |
| | | CN 106458780 A | 22-02-2017 |
| | | CN 110981585 A | 10-04-2020 |
| | | CN 116332694 A | 27-06-2023 |
| | | EP 3140264 A1 | 15-03-2017 |
| | | EP 3693351 A2 | 12-08-2020 |
| | | EP 4474370 A2 | 11-12-2024 |
| | | JP 6735235 B2 | 05-08-2020 |
| | | JP 2017517471 A | 29-06-2017 |
| | | NZ 725698 A | 25-03-2022 |
| | | TW 201602056 A | 16-01-2016 |
| | | US 2017088480 A1 | 30-03-2017 |
| | | US 2019177244 A1 | 13-06-2019 |
| | | US 2022388927 A1 | 08-12-2022 |
| | | WO 2015170217 A1 | 12-11-2015 |
| | | ZA 201607318 B | 30-05-2018 |
| | | ZA 201801245 B | 31-07-2019 |
| WO 2024262832 A1 | 26-12-2024 | NONE | |

EPO FORM P0459

For more details about this annex : see Official Journal of the European Patent Office, No. 12/82